# EUROPEAN PATENT APPLICATION

(11) **EP 4 848 769 A1**
(43) Date of publication of application: **02.12.2026**
(21) Application number: 25751294.7
(22) Date of filing: 23.01.2025
(51) Int. Cl.: H04W 8/24

(54) **METHOD FOR DETERMINING TERMINAL DEVICE, AND RELATED APPARATUS THEREFOF**

(30) Priority: 08.02.2024 CN 202410178296
(71) Applicant: Huawei Technologies Co., Ltd., Shenzhen, Guangdong 518129 (CN)
(72) Inventor: HAN, Zhilin, Shenzhen, Guangdong 518129 (CN); XU, Yishan, Shenzhen, Guangdong 518129 (CN); ZHOU, Runze, Shenzhen, Guangdong 518129 (CN)
(74) Representative: Huawei European IPR
(86) International application number: PCT/CN2025/074290
(87) International publication number: WO 2025/167692

(57) **Abstract**

This application provides a method for determining a terminal device and a related apparatus thereof. A first core network element may obtain first information indicating a terminal device having a first capability, and receive second information used to request to perform an operation on a first internet of things device, so that a first terminal device that can perform the operation on the first internet of things device can be determined based on the first information and the second information, and the appropriate first terminal device is determined to perform the operation on the first internet of things device, so as to complete a request for performing the operation on the first internet of things device.

## Description

This application claims priority to Chinese Patent Application No. 202410178296.X, filed with the China National Intellectual Property Administration on February 8, 2024 and entitled "METHOD FOR DETERMINING TERMINAL DEVICE AND RELATED APPARATUS THEREOF", which is incorporated herein by reference in its entirety.

### TECHNICAL FIELD

This application relates to the field of communication technologies, and more specifically, to a method for determining a terminal device and a related apparatus thereof.

### BACKGROUND

Currently, in an internet of things (internet of things, IoT) system, an operation requester may request a reader/writer to interact with an internet of things device (for example, an artificial IoT (artificial IoT, AIoT) device), to implement operations such as inventory and reading, so as to manage the internet of things device. The reader/writer may interact with the internet of things device through a radio frequency signal or a radio signal. For example, the reader/writer may be a terminal device, or an access network device.

However, when the terminal device is used as a reader/writer, how a network selects an appropriate terminal device as the reader/writer is a technical problem that urgently needs to be resolved.

### SUMMARY

This application provides a method for determining a terminal device and a related apparatus thereof, to select an appropriate terminal device to perform an operation on an internet of things device.

According to a first aspect, a method for determining a terminal device is provided. The method may be performed by a first core network element. Unless otherwise specified, the "first core network element" may refer to the core network element itself, or may refer to an apparatus that can support the first core network element in implementing this function. The method includes: obtaining first information, where the first information indicates a terminal device having a first capability, and the first capability includes a capability of performing an operation on an internet of things device; receiving second information, where the second information is used to request to perform an operation on a first internet of things device; and determining, based on the first information and the second information, a first terminal device in the terminal device having the first capability to perform an operation on the first internet of things device.

Based on this technical solution, the first core network element may obtain the first information indicating the terminal device having the first capability, and receive the second information used to request to perform an operation on a first internet of things device, so that the first terminal device that can perform the operation on the first internet of things device can be determined based on the first information and the second information, and the appropriate first terminal device is determined to perform the operation on the first internet of things device, so as to complete a request for performing the operation on the first internet of things device.

For example, the first core network element may be an internet of things terminal management function, for example, an internet of things device management function (tag management function, TMF) or an AIoT management function (AIoT management function, AIoTMF).

For example, the obtaining the first information includes: receiving first information from a unified data management (unified data management, UDM) network element; or receiving first information from an access and mobility management function (access and mobility management function, AMF) network element; or receiving first information from a network repository function (network repository function, NRF) network element.

For example, the receiving the second information includes: receiving the second information from a third core network element. For example, the third core network element is a network exposure function (network exposure function, NEF) network element.

For example, the second information may include information about a first area in which the first internet of things device is located. The second information may request to perform an operation on the first internet of things device in the first area.

For example, the second information may include identification information of the first terminal device. The second information may request to perform the operation on the first internet of things device within coverage of the first capability of the first terminal device.

With reference to the first aspect, in some implementations of the first aspect, the first information includes one or more of the following: identification information of the terminal device having the first capability, location information of the terminal device having the first capability, information about a second core network element serving the terminal device having the first capability, information indicating coverage of the first capability of the terminal device having the first capability, and information indicating a service requester corresponding to the terminal device having the first capability.

Based on this technical solution, the first core network element may obtain information about various types of terminal devices, so that the first terminal device that is to perform the operation on the first internet of things device can be selected based on the information about the various types of terminal devices, thereby improving reliability of determining the terminal device.

With reference to the first aspect, in some implementations of the first aspect, the information about determining, based on the first information and the second information, the first terminal device in terminal device having the first capability to perform the operation on the first internet of things device includes: determining, based on the location information of the terminal device having the first capability and location information of a first area in which the first internet of things device is located, the first terminal device in the terminal device having the first capability to perform the operation on the first internet of things device, where the second information includes the location information of the first area.

Based on this technical solution, the first core network element may select, based on the location information of the terminal device having the first capability and the location information of the first area, the first terminal device at an appropriate location to perform the operation on the first internet of things device, so that the selected first terminal device can interact with the first internet of things device in the first area, thereby improving reliability of obtaining information about the internet of things device.

With reference to the first aspect, in some implementations of the first aspect, the first information includes the location information of the terminal device having the first capability; or the method further includes: sending location request information, where the location request information is used to request the location information of the terminal device having the first capability; and receiving the location information of the terminal device having the first capability.

Based on this technical solution, the first core network element may flexibly obtain the location information of the terminal device having the first capability in a plurality of manners.

With reference to the first aspect, in some implementations of the first aspect, the second information is used to request the first terminal device to perform the operation on the first internet of things device, and the second information includes identification information of the first terminal device; and the determining, based on the first information and the second information, the first terminal device in terminal devices having the first capability to perform the operation on the first internet of things device includes: determining that the first terminal device meets a first condition, to determine the first terminal device to perform the operation on the first internet of things device, where the first condition includes: the identification information of the first terminal device is included in the identification information of the terminal device having the first capability, and the first information includes the identification information of the terminal device having the first capability.

According to this technical solution, the second information includes the identification information of the first terminal device, and the first core network element may determine whether the first terminal device has the capability of performing the operation on the internet of things device. The first core network element supports a requesting operator to specify a terminal device that serves as a reader/writer, and provides a capability determining function. This technical solution may be applied to a plurality of scenarios.

With reference to the first aspect, in some implementations of the first aspect, the first condition further includes one or more of the following: a location of the first terminal device is in a first area, and the second information includes information about the first area in which the first internet of things device is located; coverage of the first capability of the first terminal device overlaps the first area, and the second information includes the information about the first area in which the first internet of things device is located; and the first information includes the information about the service requester corresponding to the terminal device having the first capability, the second information includes information about a service requester corresponding to the first terminal device, and the information about the service requester corresponding to the terminal device having the first capability includes the information about the service requester corresponding to the first terminal device.

Based on this technical solution, the first core network element may further determine a capability of the first terminal device, for example, whether the first terminal device is in the first area in which the first terminal device can perform the operation on the first internet of things device, and whether the service requester corresponding to the first terminal device is the service requester corresponding to the terminal device having the first capability; and further determine whether the first terminal device can perform the operation on the first internet of things device, thereby improving reliability of performing the operation on the internet of things device.

With reference to the first aspect, in some implementations of the first aspect, the obtaining the first information includes: sending a subscription request message, where the subscription request message is used to request information about the terminal device having the first capability; and receiving a notification message in response to the subscription request message, where the notification message includes the first information.

Based on this technical solution, the first core network element may subscribe to the first information indicating the terminal device having the first capability, so that the appropriate first terminal device can be subsequently selected as a reader/writer based on the first information obtained through subscription.

With reference to the first aspect, in some implementations of the first aspect, the method further includes: sending request information to a core network element serving the first terminal device, where the request information is used to request the first terminal device to perform the operation on the first internet of things device; receiving information about the first internet of things device from the first terminal device; and sending the information about the first internet of things device in response to the second information.

Based on this technical solution, the first core network element may send a request for the first terminal device to perform the operation on the first internet of things device, and may return the returned information about the first internet of things device to the operation requester, to implement the request for performing the operation on the first internet of things device.

According to a second aspect, a method for determining a terminal device is provided. The method may be performed by a second core network element. Unless otherwise specified, the "second core network element" may refer to the core network element itself, or may refer to an apparatus that can support a first core network element in implementing this function. The method includes: sending first information, where the first information indicates a terminal device having a first capability, the first capability includes a capability of performing an operation on an internet of things device, and the first information is used to determine, from the terminal device having the first capability, a first terminal device that is to perform an operation on a first internet of things device.

For example, the second core network element is a UDM, an AMF, or an NRF.

For descriptions of technical effects of the implementations of the second aspect, refer to the descriptions of the implementations of the first aspect. Details are not described herein again.

With reference to the second aspect, in some implementations of the second aspect, the first information includes one or more of the following: identification information of the terminal device having the first capability, location information of the terminal device having the first capability, capability information of the terminal device having the first capability, information about a core network element serving the terminal device having the first capability, information indicating coverage of the first capability of the terminal device having the first capability, and information indicating a service requester corresponding to the terminal device having the first capability.

With reference to the second aspect, in some implementations of the second aspect, the method further includes: receiving subscription request information, where the subscription request information is used to request the first information.

With reference to the second aspect, in some implementations of the second aspect, the method further includes: sending location request information, where the location request information is used to request the location information of the terminal device having the first capability; and receiving the location information of the terminal device having the first capability, where the first information includes the location information of the terminal device having the first capability.

With reference to the second aspect, in some implementations of the second aspect, the method further includes: receiving capability information, where the first information is generated based on the capability information, and the capability information indicates one or more of the following: whether the terminal device has the first capability, coverage of the first capability, and the service requester corresponding to the terminal device.

With reference to the second aspect, in some implementations of the second aspect, the method further includes: receiving request information, where the request information is used to request the first terminal to perform the operation on the first internet of things device; sending, to the first terminal device, information used to request to perform the operation on the first internet of things device; receiving information about the first internet of things device from the first terminal device; and sending the information about the first internet of things device in response to the request information.

According to a third aspect, a communication apparatus is provided. The apparatus is configured to perform the method provided in any one of the foregoing aspects or the implementations of the foregoing aspects. Specifically, the apparatus may include a unit and/or a module configured to perform the method provided in any one of the foregoing aspects or the implementations of the foregoing aspects, for example, a processing unit and/or a transceiver unit.

In an implementation, the apparatus is a first core network element or a second core network element. When the apparatus is the first core network element or the second core network element, the transceiver unit may be a transceiver, an input/output interface, or a communication interface; and the processing unit may be at least one processor. Optionally, the transceiver is a transceiver circuit. Optionally, the input/output interface is an input/output circuit.

In another implementation, the apparatus is a chip, a chip system, or a circuit used in the first core network element or the second core network element. When the apparatus is the chip, the chip system, or the circuit used in the first core network element or the second core network element, the transceiver unit may be an input/output interface, an interface circuit, an output circuit, an input circuit, a pin, a related circuit, or the like in the chip, the chip system, or the circuit; and the processing unit may be at least one processor, a processing circuit, a logic circuit, or the like.

According to a fourth aspect, a communication apparatus is provided. The apparatus includes: a memory, configured to store a program; and at least one processor, configured to execute a computer program or instructions stored in the memory, to perform the method provided in any one of the foregoing aspects or the implementations of the foregoing aspects.

In an implementation, the apparatus is a first core network element or a second core network element.

In another implementation, the apparatus is a chip, a chip system, or a circuit used in the first core network element or the second core network element.

According to a fifth aspect, a communication apparatus is provided. The apparatus includes at least one processor and a communication interface. The at least one processor is configured to obtain, through the communication interface, a computer program or instructions stored in a storage, to perform the method provided in any one of the foregoing aspects or the implementations of the foregoing aspects. The communication interface may be implemented by hardware or software.

In an implementation, the apparatus further includes the memory.

According to a sixth aspect, a processor is provided, and is configured to perform the methods provided in the foregoing aspects.

Unless otherwise specified, or if operations such as sending and obtaining/receiving related to the processor do not conflict with actual functions or internal logic of the operations in related descriptions, the operations may be understood as operations such as outputting, receiving, and inputting of the processor, or may be understood as sending and receiving operations performed by a radio frequency circuit and an antenna. This is not limited in this application.

According to a seventh aspect, a computer-readable storage medium is provided. The computer-readable medium stores program code to be executed by a device. The program code is used to perform the method provided in any one of the foregoing aspects or the implementations of the foregoing aspects.

According to an eighth aspect, a computer program product including instructions is provided. When the computer program product runs on a computer, the computer is enabled to perform the method provided in any one of the foregoing aspects or the implementations of the foregoing aspects.

According to a ninth aspect, a chip is provided. The chip includes a processor and a communication interface. The processor reads, through the communication interface, instructions stored in a storage, to perform the method provided in any one of the foregoing aspects or the implementations of the foregoing aspects. The communication interface may be implemented by hardware or software.

Optionally, in an implementation, the chip further includes a memory. The memory stores a computer program or instructions. The processor is configured to execute the computer program or the instructions stored in the memory. When the computer program or the instructions are executed, the processor is configured to perform the method provided in any one of the foregoing aspects or the implementations of the foregoing aspects.

When the method provided in this application is performed by the chip, a quantity of chips that specifically implement the method in this application is not limited in this application. For example, the method may be performed by one chip, or may be performed by two or more chips. In addition, when two or more chips implement the method in this application, a chip vendor is not limited. The chips may be from a same vendor or from different vendors.

According to a tenth aspect, a communication system is provided, including at least one of the first core network element or the second core network element described above.

According to an eleventh aspect, a computer program is provided. When the computer program is run on a computer, the method provided in any one of the foregoing aspects or the implementations of the foregoing aspects is performed.

### BRIEF DESCRIPTION OF DRAWINGS

FIG. 1 shows an example of an architecture of a communication system applicable to an embodiment of this application;
FIG. 2 shows an example of an architecture of another communication system applicable to an embodiment of this application;
FIG. 3 is a diagram of an internet of things architecture to which an embodiment of this application may be applied;
FIG. 4 is a diagram of a structure of an access network device serving as a reader/writer;
FIG. 5 is a diagram of a structure of a terminal device serving as a reader/writer;
FIG. 6 is a schematic flowchart of a method according to an embodiment of this application;
FIG. 7 is a schematic flowchart of a method for obtaining first information according to an embodiment of this application;
FIG. 8 is a schematic flowchart of another method for obtaining first information according to an embodiment of this application;
FIG. 9 is a schematic flowchart of a method for determining a first terminal device according to an embodiment of this application;
FIG. 10 is a schematic flowchart of another method for determining a first terminal device according to an embodiment of this application; and
FIG. 11 to FIG. 13 each are a diagram of a structure of an apparatus according to an embodiment of this application.

### DESCRIPTION OF EMBODIMENTS

The following describes technical solutions of this application with reference to accompanying drawings.

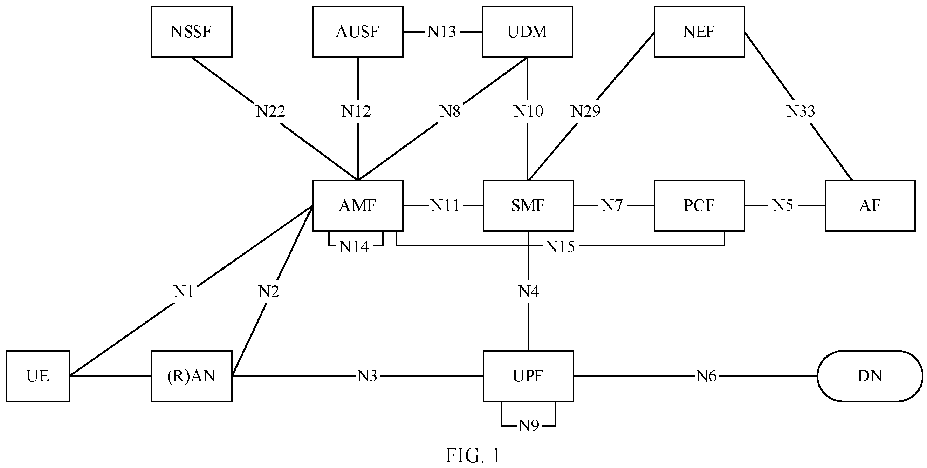

FIG. 1 shows an example of an architecture of a communication system applicable to an embodiment of this application.

Functions of a terminal device and each network entity are described in the following.

A UE shown in FIG. 1 represents a terminal. The terminal refers to one of various devices that can provide voice and/or data connectivity for a user, and can communicate with one or more core networks through a radio access network (radio access network, RAN). The terminal may also be referred to as a terminal (terminal) device, a terminal device unit (subscriber unit), a terminal device station, a terminal device agent, a terminal device apparatus, an access terminal, a terminal in V2X communication, a user unit, a user equipment (user equipment, UE), a user station, a mobile station, a mobile station (mobile station, MS), a remote station, a remote terminal, a mobile device, a user terminal, a wireless communication device, a user agent, or a user apparatus.

The terminal in embodiments of this application may alternatively be a mobile phone (mobile phone), a tablet (pad), a computer with a wireless transceiver function, a holographic projector, a video player, a virtual reality (virtual reality, VR) terminal, an augmented reality (augmented reality, AR) terminal, a wireless terminal in industrial control (industrial control), a terminal in an internet of things (internet of things, IoT) system, a tactile terminal device, a vehicle-mounted terminal device, a road side unit (road side unit, RSU), a wireless terminal in self driving (self-driving), a communication terminal in an uncrewed aerial vehicle, a wireless terminal in telemedicine (telemedicine), a wireless terminal in a smart grid (smart grid), a wireless terminal in transportation safety (transportation safety), a wireless terminal in transportation safety, a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a compute device or another processing device connected to a wireless modem, a vehicle-mounted device, a wearable device, a terminal in a 5G network, a terminal in a future evolved network, or the like.

The wearable device may also be referred to as a wearable intelligent device, and is a generic term for wearable devices such as a head-mounted display, XR glasses, gloves, watches, clothes, and shoes that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or some functions without depending on smartphones, for example, smart watches or smart glasses, and include devices that are dedicated to one type of application function and that need to collaboratively work with other devices such as smartphones, for example, various smart bands or smart jewelry for monitoring physical signs.

The terminal may be used in various communication scenarios, for example, device-to-device (device-to-device, D2D) communication, vehicle to everything (vehicle to everything, V2X) communication, machine-type communication (machine-type communication, MTC), internet of things (internet of things, IoT), virtual reality (virtual reality, VR), augmented reality (augmented reality, AR), industrial control (industrial control), autonomous driving (autonomous driving), telemedicine (telemedicine), smart grid (smart grid), smart furniture, smart office, smart wearable, smart transportation, and smart city (smart city). The terminal device may be a mobile phone (mobile phone), a tablet (pad), a computer having a wireless transceiver function, a wearable device, an aerospace device, an uncrewed aerial vehicle device, or the like. In embodiments of this application, a chip used in the foregoing device may also be referred to as a terminal.

The (R)AN in FIG. 1 represents a (radio) access network (radio access network, RAN) device. For example, the access network device in embodiments of this application may be any communication device with a wireless transceiver function and for communication with the user equipment. The access network device includes but is not limited to an evolved nodeB (evolved NodeB, eNB), a radio network controller (radio network controller, RNC), a nodeB (NodeB, NB), a base station controller (base station controller, BSC), a base transceiver station (base transceiver station, BTS), a home base station (home evolved NodeB, HeNB, or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the access network device may be a gNB or a transmission point (TRP or TP) in a 5G mobile communication system like an NR system, or one antenna panel or one group of antenna panels (including a plurality of antenna panels) of a base station in the 5G mobile communication system, or may be a network node, for example, a baseband unit (BBU) or a distributed unit (distributed unit, DU), that constitutes a gNB or a transmission point.

In some deployments, the access network device may be a device including a CU or a DU, a device including a CU and a DU, or a device including a CU-control plane (central unit-control plane (central unit-control plane, CU-CP)) node, a CU-user plane (central unit-user plane (central unit-user plane, CU-UP)) node, and a DU node. For example, the access network device may include a gNB-CU-CP, a gNB-CU-UP, and a gNB-DU. The CU (or a CU-CP and a CU-UP) implements some functions of the access network device, and the DU implements some functions of the access network device. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is generated by the CU, and is finally encapsulated at the PHY layer of the DU into information at the PHY layer, or is transformed from the information at the PHY layer. Therefore, in this architecture, higher layer signaling, for example, RRC layer signaling, may also be considered to be sent by the DU, or sent by the DU and the AAU. It may be understood that the access network device may be a device including one or more of a CU node, a DU node, or an AAU node. In addition, the CU may be classified as an access network device in an access network, or the CU may be classified as an access network device in the core network (core network, CN). This is not limited in this application.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented through a software module, a hardware module, or a combination of a software module and a hardware module.

It should be noted that an apparatus configured to implement a function of the access network device may be an access network device, or may be an apparatus that can support the access network device in implementing the function, for example, a chip system, a hardware circuit, a software module, or a combination of a hardware circuit and a software module, where the apparatus may be installed in the access network device or used with the access network device. In embodiments of this application, an example in which the apparatus configured to implement the function of the access network device is an access network device is merely used for description, and constitutes no limitation on the solutions in embodiments of this application.

The access network device and/or the tag may be deployed on the land, including an indoor device, an outdoor device, a handheld device, or a vehicle-mounted device; may be deployed on the water; or may be deployed on an airplane, a balloon, and a satellite in the air. Scenarios in which the access network device and the tag are located are not limited in embodiments of this application. In addition, the tag and the access network device may be hardware devices; may be software functions running on dedicated hardware, or software functions running on general-purpose hardware, for example, virtualized functions instantiated on a platform (for example, a cloud platform); or may be entities including a dedicated or general-purpose hardware device and a software function. Specific forms of the tag and the access network device are not limited in this application.

In addition, to support an artificial intelligence (artificial intelligence, AI) technology in a wireless network, an AI node may be further introduced in the network. Optionally, the AI node may be deployed at one or more of the following locations in the communication system: an access network device, a tag, a core network element, or the like. Alternatively, the AI node may be independently deployed, for example, deployed at a location other than any one of the foregoing devices, for example, a host or a cloud server in an over the top (over the top, OTT) system. The AI node may communicate with another device in the communication system. The another device may be, for example, one or more of the following: an access network device, a tag, a core network element, or the like.

An AMF in FIG. 1 belongs to a core network element, and is mainly responsible for functions such as access management, mobility management, network slice selection, and SMF selection of a terminal. In addition, the AMF is further responsible for transferring a user policy between the terminal and a policy control function (policy control function, PCF).

An SMF in FIG. 1 is mainly responsible for a control plane function of terminal session management, including selection and control of a user plane function (user plane function, UPF), internet protocol (Internet Protocol, IP) address assignment, session establishment, session QoS management, obtaining of a policy and charging control (policy and charging control, PCC) policy (from the PCF), and the like.

A UPF in FIG. 1 serves as an anchor point of a protocol data unit (protocol data unit, PDU) session connection, is responsible for data packet filtering, data transmission/forwarding, rate control, charging information generation, and the like of a terminal, and provides a connection to a data network (data network, DN).

A DN in FIG. 1 refers to a specific data service network accessed by the terminal. The DN is responsible for providing an operator service, internet access, or a third-party service. The DN includes a server, and the server may implement video source encoding, rendering, and the like. A typical DN includes an internet network, an IP multimedia service (IP multimedia service, IMS) network, and the like. The DN is identified by a data network name (data network name, DNN) in a 5G network.

A unified data management (unified data management, UDM) network element in FIG. 1 is mainly configured to manage and control user data, for example, manage subscription information, including obtaining subscription information from a unified data repository (unified data repository, UDR) and providing the subscription information for another network element (for example, the AMF); generating an authentication credential of the third generation partnership project (third generation partnership project, 3GPP) for a terminal device; registering and maintaining a network element currently serving the terminal, for example, the AMF currently serving the terminal (namely, the serving AMF); and being responsible for notifying a corresponding network element when subscription data is modified.

A network repository function (network repository function, NRF) network element in FIG. 1 is mainly configured to support registration and discovery of a network function.

A network exposure function (network exposure function, NEF) network element in FIG. 1 is configured to expose services and capabilities of a 3GPP network function to an application function (application function, AF), and may also enable the AF to provide information for the 3GPP network function.

An AF in FIG. 1 interacts with a core network element to provide some services, for example, interacts with a PCF to perform service policy control, interacts with an NEF to obtain some network capability information or provide some application information for a network, and provides some data network access point information for the PCF to generate routing information of a corresponding data service.

An authentication server function (authentication server function, AUSF) in FIG. 1 is configured to perform security authentication on the terminal device when the terminal device accesses a network.

A network slice selection function (network slice selection function, NSSF) network element in FIG. 1 is configured to select a slice instance set for the terminal device. A network slice instance that the terminal device is allowed to access is determined based on network slice selection assistance information (network slice selection assistance information, NSSAI) of the terminal device, subscription information, and the like.

A PCF in FIG. 1 provides configuration policy information for the terminal device, provides policy information for controlling and managing the terminal device for a control plane network element (for example, the AMF or the SMF) of the network, and generates a terminal device access policy and a QoS flow control policy.

The terminal device in this embodiment of this application is connected to a RAN device in a wireless manner, and the RAN device is connected to a 5G core network device (5GC) in a wireless or wired manner. The 5GC device and the RAN device may be different independent physical devices, or functions of the 5GC device and logical functions of the RAN device may be integrated into a same physical device, or some functions of the 5GC device and some functions of the RAN device may be integrated into one physical device. The terminal device may be located at a fixed location, or may be mobile.

The 5GC device mainly includes the NEF network element, the PCF network element, the AF network element, the AMF network element, the UDM network element, the SMF network element, the UPF network element, and the like.

It should be noted that the foregoing "network element" may also be referred to as an entity, a device, an apparatus, a module, or the like, and there is no particular limitation in this application herein. In addition, in this application, for ease of understanding and description, descriptions of "network element" are omitted in some descriptions. For example, the AMF network element is referred to as an AMF for short. In this case, the "AMF" should be understood as an AMF network element or an AMF entity. Descriptions of same or similar cases are omitted below.

It should be noted that a name of each network element included in FIG. 1 is merely a name, and the name does not limit a function of the network element. In a 5G network and other networks in the future, the network elements may have other names. This is not specifically limited in embodiments of this application. For example, in a future communication network, terms in 5G may be reused for a part of or all the network elements, or other names may be used. This applies throughout and is not repeated below.

It should be noted that the network elements in FIG. 1 do not necessarily exist simultaneously, and required network elements may be determined based on a requirement. A connection relationship between the network elements in FIG. 1 is not uniquely determined, and may be adjusted based on a requirement.

It should be further understood that the foregoing naming is merely used to distinguish between different functions, and does not represent that these network elements are separate physical devices. Specific forms of the foregoing network elements are not limited in this application. For example, the network elements may be integrated into a same physical device, or may be separately different physical devices. In actual deployment, the network elements or devices may be co-located. For example, the access and mobility management network element may be co-located with the session management network element. The session management network element may be co-located with the user plane network element. When two network elements are co-located, interaction between the two network elements provided in embodiments of this application becomes an internal operation of the co-located network element or may be omitted.

It may be understood that the foregoing network elements or functions may be network elements in a hardware device, or may be software functions running on dedicated hardware or virtualized functions instantiated on a platform (for example, a cloud platform).

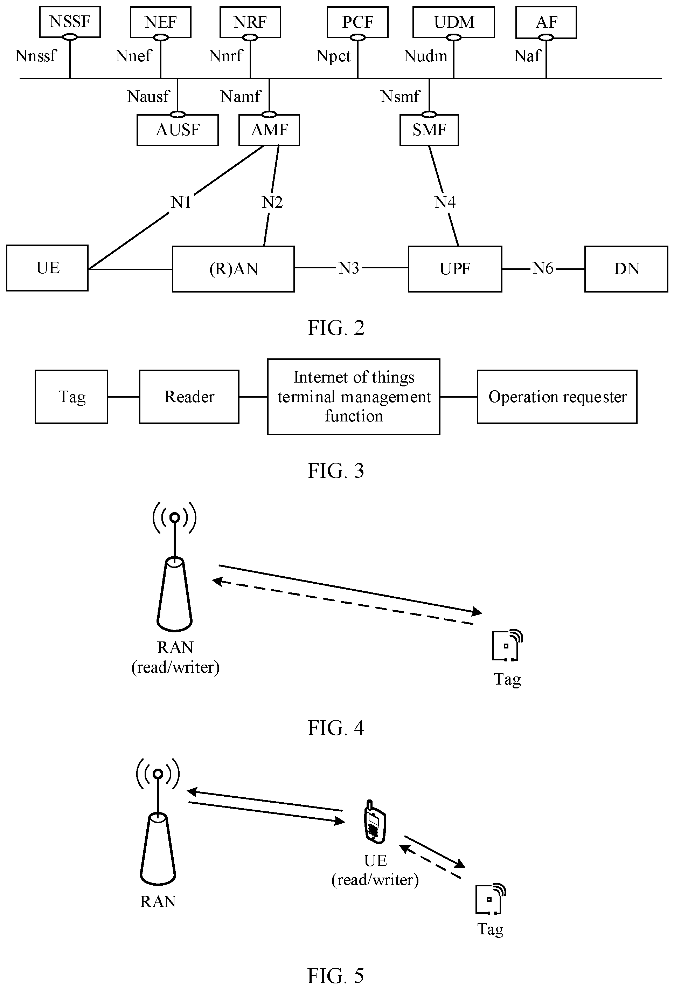

FIG. 2 shows an example of another architecture of a communication system applicable to an embodiment of this application.

A service-based architecture and a communication mode of the service-based architecture are briefly described. Refer to FIG. 1. An embodiment of this application provides a service-based network architecture 100, including a plurality of network functions (network functions, NFs).
1. A network slice selection network element is mainly configured to provide slice selection. In 5G communication, the network slice selection network element may be a network slice selection function (network slice selection function, NSSF). Nnssf is a service-based interface provided by the NSSF. The NSSF may communicate with another network function through Nnssf.
2. A network exposure network element is configured to securely expose, to the outside, a service, a capability, and the like that are provided by a 3rd generation partnership project (3rd generation partnership project, 3GPP) network function. In 5G communication, the network exposure network element may be a network exposure function (network exposure function, NEF) network element. Nnef is a service-based interface provided by the NEF. The NEF may communicate with another network function through Nnef.
3. A network repository network element is configured to store description information of a network functional entity and description information of a service provided by the network functional entity, and support service discovery, network element entity discovery, and the like. In 5G communication, the network repository network element may be a network repository function (network repository function, NRF) network element. Nnrf is a service-based interface provided by the NRF. The NRF may communicate with another network function through Nnrf.
4. A policy control network element is configured to: guide a unified policy framework for network behavior, and provide policy rule information and the like for a control plane function network element (for example, an AMF or an SMF). In 5G communication, the policy control network element may be a policy control function (policy control function, PCF) network element. Npcf is a service-based interface provided by the PCF. The PCF may communicate with another network function through Npcf.
5. A data management network element is configured to perform user identifier processing, access authentication, registration, mobility management, or the like. In 5G communication, the data management network element may be a unified data management (unified data management, UDM) network element. Nudm is a service-based interface provided by the UDM. The UDM may communicate with another network function through Nudm.
6. An application network element is configured to: perform application-affected data routing, access the network exposure function, interact with a policy framework to perform policy control, or the like. In 5G communication, the application network element may be an application function (application function, AF) network element. Naf is a service-based interface provided by the AF. The AF may communicate with another network function through Naf.
7. An authentication service network element is mainly for user authentication or the like. In 5G communication, the authentication service network element may be an authentication service function (authentication server function, AUSF) network element. Nausf is a service-based interface provided by the AUSF. The AUSF may communicate with another network function through Nausf.
8. An access management network element is mainly configured to perform mobility management, access management, and the like, and may be configured to implement functions, for example, lawful monitoring or access authorization (or authentication), in a mobility management entity (mobility management entity, MME) function other than session management. In 5G communication, the access management network element may be an access and mobility management function (access and mobility management function, AMF) network element. Namf is a service-based interface provided by the AMF. The AMF may communicate with another network function through Namf.
9. A session management network element is mainly configured to: manage a session, allocate and manage an internet protocol (internet protocol, IP) address of a terminal device, select a termination point that can manage a user equipment plane function interface and a policy control and charging function interface, perform downlink data notification, and the like. In 5G communication, the session management network element may be a session management function (session management function, SMF) network element. Nsmf is a service-based interface provided by the SMF. The SMF may communicate with another network function through Nsmf.
10. User equipment (user equipment, UE) The UE may include various handheld devices, vehicle-mounted devices, wearable devices, and compute devices that have a wireless communication function, or other processing devices connected to a wireless modem, and terminals in various forms such as a mobile station (mobile station, MS), a terminal (terminal), a user equipment (user equipment, UE), and a software terminal, for example, a water meter, an electricity meter, and a sensor.
11. A (radio) access network (radio access network, (R)AN) network element is configured to provide a network access function for authorized user equipment in a specific area, and can use transmission tunnels with different quality based on user equipment levels, service requirements, and the like.

The RAN can manage radio resources and provide an access service for a terminal device, to forward a control signal and user equipment data between the terminal and a core network. The RAN may also be understood as a base station in a conventional network.
12. A user plane network element is for packet routing and forwarding, quality of service (quality of service, QoS) handling for user plane data, or the like. In 5G communication, the user plane network element may be a user plane function (user plane function, UPF) network element.
13. A data network (data network, DN) network element is configured to provide a network for transmitting data, for example, an internet network. The DN network element may be a data network authentication, authorization, and accounting (data network authentication, authorization, accounting), an application server (application function), or the like.

In embodiments of this application, the core network element, the RAN, and the UE may be used for internet of things management, for example, a passive internet of things (passive IoT, PIoT). To understand the architecture, the following describes the architecture by using an example with reference to FIG. 3. For detailed descriptions of some network elements in the architecture, such as the RAN and the AMF, refer to the foregoing descriptions in FIG. 1 and FIG. 2.

FIG. 3 is a diagram of an internet of things architecture to which an embodiment of this application may be applied. The following briefly describes network elements or devices in FIG. 1.

### 1. Tag

In embodiments of this application, the terminal may be a passive internet of things terminal device, or referred to as an ambient internet of things device (AIoT device). The passive terminal device may be in a form of a tag, or may be in any other terminal form. In this application, an example in which the passive terminal device is in a form of a tag is used for description. However, this is not limited in this application.

An electronic tag includes a tag antenna and a tag-dedicated chip. Generally, according to different power supply modes of electronic tags, electronic tags may be classified into an active tag (active tag), a passive tag (passive tag), and a semi-passive tag (semi-passive tag). The active tag is equipped with a battery, the passive tag is not equipped with a battery, and the semi-passive tag partially relies on a battery to work. The electronic tags may be classified into a low frequency electronic tag, a high frequency electronic tag, an ultra-high frequency electronic tag, and a microwave electronic tag based on different frequencies. Certainly, classification may alternatively be performed based on different encapsulation forms. Details are not described herein. The passive tag may also be referred to as a passive internet of things (passive Internet of things, PIoT) device or a passive terminal in this application.

It should be noted that an apparatus configured to implement a function of the tag may be a tag, or may be an apparatus that can support the tag in implementing the function, for example, a chip system, where the apparatus may be installed in the tag or used in matching with the tag. In this embodiment of this application, the chip system may include a chip, or may include a chip and another discrete component. In embodiments of this application, an example in which the apparatus configured to implement the function of the tag is the tag is merely used for description, and constitutes no limitation on the solutions in embodiments of this application.

### 2. Reader

The reader (reader) interacts with the passive internet of things device through a radio frequency signal or a wireless signal. It should be understood that a name of the reader is not limited in this application, and the reader may also be named a reader/writer or another name. In other words, it may be understood that names of the reader and the reader/writer are interchangeable. The reader herein has functions related to the reader in this application. For example, the reader has a function of performing an operation (for example, obtaining information about a passive internet of things device, an inventory operation, a read operation, a write operation, a disable operation, or a message interaction operation with a passive internet of things device) described in this application on a terminal (for example, a passive internet of things device), and has a function of obtaining charging related information and/or charging information, and sending charging information to a CHF. In a possible implementation, the reader may send an instruction from a server or an application function to the passive internet of things device, or the reader may send a message from the passive internet of things device to the server or the application function. In a possible implementation, the reader may obtain, based on the instruction delivered by the server, information stored in the passive internet of things device. For example, if the operation is the inventory operation (or may be referred to as a counting operation), the reader obtains identification information of the passive internet of things device. The identification information may be a unique identifier of the passive internet of things device, or may be a temporary identifier of the passive internet of things device. For example, if the operation is the read operation, the reader reads data in a storage area of the passive internet of things device. Optionally, in some scenarios in which information stored in the passive internet of things device needs to be rewritten, the reader may further have a write function. If the operation is the write operation, the reader writes data into the storage area of the passive internet of things device. In addition, the reader may further perform the disable operation on the passive internet of things device. After the disable operation is performed, the passive internet of things device fails, and cannot be used to perform the operation, for example, obtaining the information about the passive internet of things device, the inventory operation, the read operation, the message interaction operation with the passive internet of things device, or the write operation. In a possible implementation, that the passive internet of things device fails and cannot be used to obtain the information about the passive internet of things device may be understood as that after the passive internet of things device fails, the reader cannot obtain the information obtain the passive internet of things device of the failed passive internet of things device. In another possible implementation, that the passive internet of things device fails and cannot be used to perform the message interaction operation with the passive internet of things device may be understood as that after the passive internet of things device fails, the reader cannot perform message interaction with the failed passive internet of things device. In this application, the reader may be a terminal device or may be an access network device, a pole station, an eNodeB, a gNodeB, an integrated access and backhaul (integrated access and backhaul, IAB) node, or the like. A form of the reader is not limited in this application.

### 3. Internet of things terminal management function

Internet of things terminal management function (or referred to as a passive internet of things device management function): The internet of things terminal management function may be, for example, the passive internet of things device management function (tag management function, TMF) in FIG. 1, or the internet of things terminal management function may be an ambient energy obtaining internet of things management function (ambient IoT management function, AIoTMF). The internet of things terminal management function is used to transmit service data of the terminal device 101 or manage an internet of things terminal (or a passive internet of things device). For example, when the terminal device is a passive internet of things device, the internet of things terminal management function may be used to transmit and/or manage service data of the passive internet of things device. A name of the internet of things terminal management function (or referred to as a passive internet of things device management function) is not limited in this application, and may be another name.

For ease of description, in embodiments of this application, the TMF is mainly used as the internet of things terminal management function for description. The TMF is mainly responsible for tag management, for example, tag inventory and access management. The TMF may be an independent network element, or may be integrated with, in other words, deployed together with another network element, for example, integrated with an access and mobility management function (access and mobility management function, AMF) network element, a user plane (user plane function, UPF), the UDM, or the UDR. The TMF being integrated with the AMF, the UPF, the UDM, the UDR, or the like may be understood as that improving another network element causes the network element to have the function of the TMF, for example, improving the AMF, the UPF, the UDM, or the UDR causes the AMF, the UPF, the UDM, or the UDR to have the function of the TMF; or may be understood as that the TMF may further have a function of the AMF, the UPF, the UDM, the UDR, or the like in addition to the function of tag management, for example, tag inventory and access management. For example, the TMF may undertake a tag mobility management function, a tag transfer function of user data, the tag mobility management function, a tag unified data management function, a tag data buffering function, or the like.

### 4. Operation requester (or referred to as a service requester or a third party)

The operation requester may be a server or an application function. In this embodiment of this application, the operation requester may be understood as a device that sends an operation instruction. For example, the operation requester may be a server (server), an AIoT server, an application function (application function, AF), or another device that sends an operation instruction. The operation requester may correspond to a specific type of user. The specific type of user may include the enterprise, a tenant, the third party, or a company. This is not limited. That the operation requester corresponds to the specific type of user may be understood as that the operation requester belongs to the specific type of user and is managed by the specific type of user. For ease of description, in embodiments of this application, an example in which the AF is used as the operation requester is mainly used for description.

The AF may interact with the internet of things terminal management function through a core network function (for example, an NEF). The core network function is mainly for exposing services and capabilities of the 3rd generation partnership project (the 3rd Generation Partnership Project, 3GPP) network function to the AF, and may also enable the AF to provide information to the 3GPP network function. For ease of description, in embodiments of this application, the NEF is mainly used as an example for description.

The internet of things architecture shown in FIG. 3 may be a passive internet of things (Passive IoT, PIoT); or referred to as an ambient energy obtaining internet of things (Ambient IoT, AIoT). The following uniformly refers to the internet of things architecture as the ambient energy obtaining internet of things, but is not limited to that the name is the ambient energy obtaining internet of things. In other words, some network nodes may be passive (passive), semi-passive (semi-passive), or active (active). Passive and semi-passive terminals may communicate by using a reflected carrier, that is, the passive and semi-passive terminals need to rely on an external carrier source for communication. The passive terminal may or may not have an energy storage capacitor. If the passive terminal has an energy storage capacitor, the passive terminal needs to rely on an external environment to obtain energy for communication, for example, radio frequency energy. The semi-passive terminal may have a power amplifier, so that a communication distance is longer than that of the passive terminal. The semi-passive terminal usually has an energy storage capacitor, and may store energy such as solar energy and radio energy in an environment in the capacitor. An active terminal (active device) may actively generate a carrier (or may be understood as having a carrier recovery capability), and may perform communication without relying on an external carrier source, and therefore may have an active communication capability. However, the active terminal may also be backward compatible with a communication mechanism of a passive or semi-passive terminal. That is, the active terminal may be triggered, in an external excitation manner, to initiate a random access procedure and send identification information. In a possible implementation, the active terminal may also have an energy storage capacitor, and may obtain energy in a manner of solar energy, radio frequency energy, wind energy, water energy, tidal energy, or the like. An energy obtaining manner is not limited. These nodes are not equipped with or do not depend on power supply devices such as batteries, but obtain energy from an environment, to support data sensing, transmission, and distributed computing. The nodes may further store the obtained energy. The ambient energy obtaining internet of things architecture may include an internet of things terminal, a reader (reader), an internet of things function, and a server. The internet of things terminal may be in a form of a passive internet of things device, a sensor, or the like, or may be in any other terminal form. This is not limited. The reader may be an access network device, for example, a base station, a pole site, a micro base station, a macro base station, a relay point (for example, an integrated access and backhaul node IAB node), or a mobile base station. The reader may alternatively be a terminal device, for example, a mobile phone, an IoT device, or a handheld reader/writer. In the disclosure, the internet of things terminal is described by using a passive internet of things device as an example, but is not limited to the passive internet of things device. Unless otherwise specified, the internet of things terminal and the passive internet of things device may be interchangeable. The reader (Reader) performs non-contact bidirectional data communication in a wireless radio frequency manner and reads or writes an electronic passive internet of things device or a radio frequency card (Tag) in the wireless radio frequency manner, to identify a target and exchange data. The reader works in two ways. One is that when entering an effective identification range of the reader, a passive internet of things device receives a radio frequency signal sent by the reader and sends, by using energy obtained from an induced current, information stored in a chip (corresponding to the passive internet of things device). The other is that the passive internet of things device can store some electrical energy through solar energy or other means, so that the passive internet of things device can actively send a signal at a specific frequency (this type of passive internet of things device can also be referred to as a semi-passive internet of things device or a semi-active internet of things device or a passive internet of things device). After receiving and decoding the information, the reader sends the information to a central information system for data processing. This technology is widely used in various industries. The following lists two application scenarios.
(1) Warehouse/Transportation/Materials: Products are embedded with or attached with semi-passive or semi-active or passive internet of things devices. During logistics of products stored in warehouses and shopping malls, product-related information is automatically collected by readers. Management personnel can quickly query the product information in a system, to reduce a risk of discarding or stealing the products, improve a speed of product handover, improve accuracy, and prevent unauthorized sales and forgery.
(2) Fixed asset management: Places with a large quantity of assets or valuable items, such as libraries, art galleries, and museums, require comprehensive management procedures or strict protection measures. If storage information of books or valuable items changes abnormally, a system immediately notifies an administrator to process a related case.

When performing an operation on the passive internet of things device, a server may send an operation instruction to a core network. The operation instruction may include but is not limited to performing an operation of obtaining information about the passive internet of things device, an inventory operation (or referred to as a counting operation), a read operation, a write operation, a disable (Disable) operation, and an information interaction operation with the passive internet of things device. The instruction may include area location information, identification information of the passive internet of things device, and the like. The base station sends an access instruction to the passive internet of things device. After the passive internet of things device successfully performs random access, the base station sends an instruction to the passive internet of things device (the base station may forward, to the passive internet of things device, an instruction sent by the core network). The passive internet of things device obtains or sends corresponding information based on the instruction. For example, when the instruction is an inventory instruction or is used to perform an inventory operation, the passive internet of things device sends the identification information of the passive internet of things device. When the instruction is a read instruction or is used to perform a read operation, the passive internet of things device sends data information stored in a storage area of the passive internet of things device. When the instruction is a write instruction or is used to perform a write operation, the passive internet of things device stores, in the storage area of the passive internet of things device, the data information that is to be written into the passive internet of things device and that is included in the instruction. The base station sends (or forwards) the information sent by the passive internet of things device to the core network, and the core network sends the information to the server.

A manner in which the server sends the instruction may be using a control plane channel for sending. As shown in FIG. 3, the server sends the instruction to an AMF (or another core network device capable of managing the passive internet of things device, executing an instruction of the passive internet of things device, or supporting the passive internet of things device, for example, a passive internet of things device management function (Tag Management Function, TMF)). In this case, the server may be an application function (application function, AF), an application server (application server, AS), or a passive internet of things application function (PIoT AF or AIoT AF). In a possible implementation, the PIoT AF sends the instruction to the AMF or the TMF through the NEF. In the foregoing architecture, after obtaining the instruction, the AMF or the TMF parses the instruction from the AF, and the AMF or the TMF triggers the access network device (for example, a RAN) to perform a random access procedure of the passive internet of things device (or the internet of things terminal), and sends the instruction to the passive internet of things device through the RAN, to complete an operation on the passive internet of things device.

In some implementations, a service requester may not actively trigger service counting, but instead, a network is preconfigured to periodically report an internet of things terminal in a campus. Alternatively, the passive internet of things device is attached to a commodity, and the passive internet of things device is periodically counted through a network, so that a status of products in an enterprise campus or a factory can be learned, thereby implementing a function of automatic warehousing management. In this case, in comparison with the foregoing service counting, a difference is that a trigger of the counting service may not be the service requester (that is, the AF in FIG. 3). Therefore, after the network triggers random access of the internet of things terminal and obtains the identification information, the information needs to be reported to the service requester, to implement a periodic basic counting service.

It can be learned from the foregoing description that both the RAN and the UE may be used as readers/writers to manage the passive internet of things device.

FIG. 4 is a diagram of a structure of a RAN serving as a reader/writer (or a small cell). It can be learned that the RAN may directly interact with an electronic tag to transmit related information. In this case, the RAN may report capability information to a core network element, and the core network element selects, based on a request of a service requester, an appropriate RAN as the reader/writer.

FIG. 5 is a diagram of a structure of a UE serving as a reader/writer. It can be learned that a RAN may serve as a macro base station, the UE may serve as an intermediate node (intermediate node), and an electronic tag interacts with the UE. In this case, the RAN may transparently transmit signaling between the UE and a core network element.

However, if the UE serves as the reader/writer, how a core network selects an appropriate UE as the reader/writer is a technical problem that urgently needs to be resolved.

This application provides a method for determining a UE. The method may be applied to the system architectures described in FIG. 1 to FIG. 3.

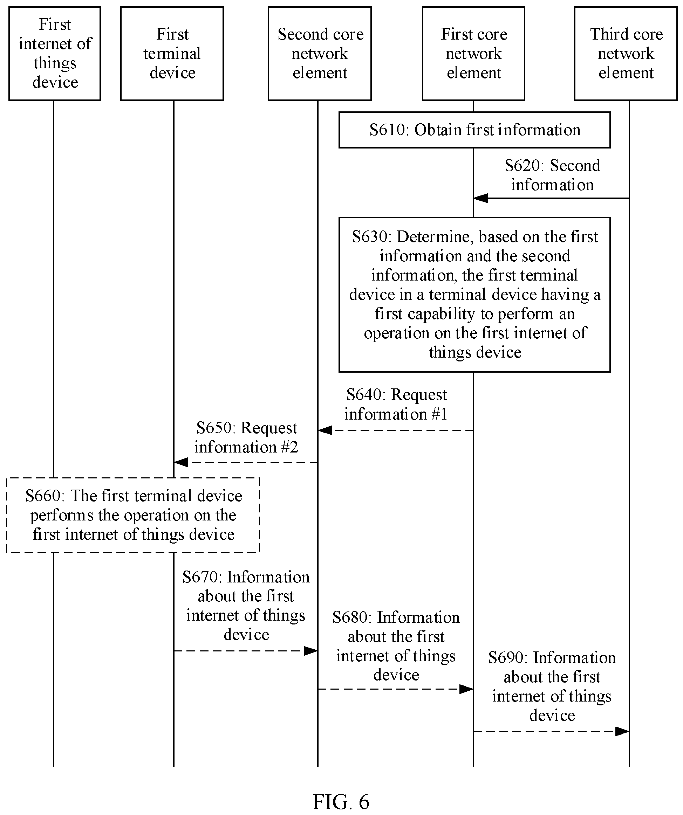

FIG. 6 is a schematic flowchart of a method according to an embodiment of this application.

S610: A first core network element obtains first information.

The first information indicates a terminal device having a first capability, and the first capability includes a capability of performing an operation on an internet of things device. Therefore, the first core network element may obtain the first information indicating the terminal device having the first capability, and may determine, based on the first information, a first terminal device that can perform an operation on a first internet of things device, and determine the appropriate first terminal device to perform the operation on the first internet of things device, so as to complete a request for performing the operation on the first internet of things device.

It may be understood that the first core network element may be the internet of things terminal management function shown in FIG. 3. For example, the first core network element may be a TMF or an AMF. This is not particularly limited in this application. For ease of description, in embodiments, an example in which the first core network element is the TMF is mainly used for description.

It may be further understood that the first internet of things device may be the tag shown in FIG. 3. For brevity, details are not described herein again.

It may be further understood that the first capability includes a capability of performing the operation on the internet of things device. In other words, the first capability may be a capability of the reader described in FIG. 3, and the reader can interact with the internet of things device through a radio frequency signal or a wireless signal, and obtain information about the internet of things device through interaction. Therefore, in this embodiment of this application, the terminal device having the first capability may be understood as the reader (or the reader/writer) described in FIG. 3.

The operation performed on the first internet of things device and the information about the first internet of things device are related to an application scenario of the method in this application. For example, if the method is applied to a counting operation, the information about the first internet of things device may include identification information of the first internet of things device, and the terminal device serves as a reader/writer to obtain the identification information of the first internet of things device, to implement the inventory operation. For another example, if the method is applied to a read operation, the information about the first internet of things device may include information in a memory of the first internet of things device, and the terminal device serves as a reader/writer to obtain the information in the memory of the first internet of things device, to implement the read operation.

The first information indicates the terminal device having the first capability, so that the first core network element can know, based on the first information, which terminal device or which terminal devices can be used as the reader/writer.

For example, the first information may include identification information of the terminal device having the first capability, so that the first core network element may learn, based on the identification information, of the terminal device having a reader/writer function. The identification information of the terminal device having the first capability may be an SUPI or a reader ID. A specific form of the identification information of the terminal device having the first capability is not limited in this application.

In some implementations, the first information may further include location information of the terminal device having the first capability. Therefore, the first core network element may subsequently select an appropriate terminal device as the reader/writer based on the location information.

In some implementations, the first information may further include information about a second core network element serving the terminal device having the first capability, for example, identification information of the second core network element. For example, the second core network element may be an AMF (serving AMF) that serves the terminal device. Therefore, the first core network element may learn of an AMF through which the first core network element subsequently interacts with the terminal device.

In some implementations, the first information further includes information indicating coverage of the first capability of the terminal device having the first capability. For example, the first information may indicate a maximum distance at which the terminal device can interact with the internet of things device when the terminal device is used as the reader/writer. For example, if the first information indicates that the maximum distance supported by the terminal device when the terminal device is used as the reader/writer is 10 meters, the first core network element may consider that the terminal device can obtain information about an internet of things device whose distance is less than or equal to 10 meters. The coverage may be understood as an area range with a center of the terminal device and a radius of 10 meters.

In some implementations, the first information may indicate information about a service requester corresponding to the terminal device having the first capability, for example, an AF ID/owner ID corresponding to the terminal device, or an enterprise/user identifier to which the terminal device belongs.

The foregoing describes an example of content that may be carried in the first information. It may be understood that this application does not exclude other information that can be obtained by the first core network element about the terminal device having the first capability.

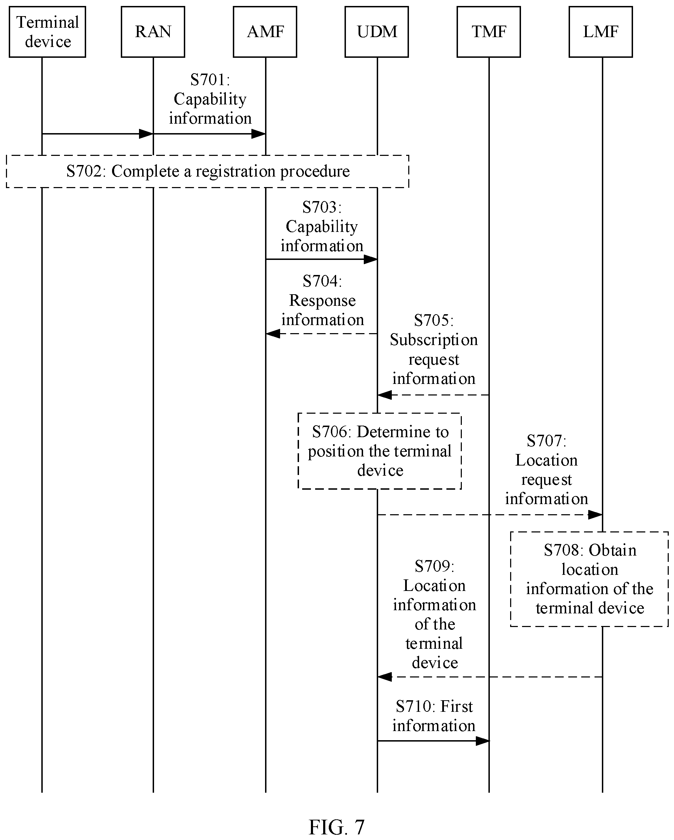

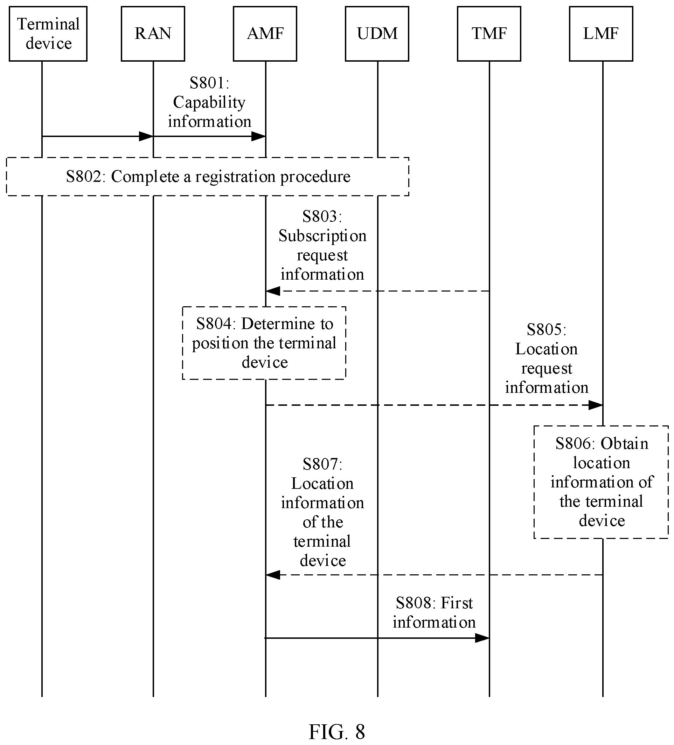

The first core network element may obtain the first information in a plurality of manners. In a first implementation, the first core network element may obtain the first information from a UDM. For example, the first core network element may subscribe to the first information from the UDM. In a second implementation, the first core network element may obtain the first information from the AMF. For example, the first core network element subscribes to the first information from the AMF, or the AMF actively sends the first information to the first core network element in a registration procedure of the terminal device. This is not particularly limited in this application. For example, if an NRF may store the first information, the first core network element may also obtain the first information from the NRF. For more detailed descriptions of obtaining the first information, refer to the following descriptions in FIG. 7 and FIG. 8. Details are not described herein again.

It may be understood that the first core network element may store the first information. For example, the first core network element may establish the first information as a context of the terminal device. Therefore, the first core network element may subsequently determine, based on the context of the terminal device, the terminal device that serves as the reader/writer.

S620: A third core network element sends second information to the first core network element. Correspondingly, the first core network element receives the second information from the third core network element.

The second information is used to request to perform the operation on the first internet of things device. The third core network element may be configured to receive a message from an operation requester, and send the message to the first core network element. For example, the third core network element may be the NEF in FIG. 1. The NEF may obtain the second information from the operation request method (for example, the AF) shown in FIG. 3, and send the second information to the first core network element. The second information requests a management service for the first internet of things device, so that the first core network element can determine an appropriate reader/writer for the first internet of things device to provide a service.

The third core network element may request, in a plurality of manners, to perform the operation on the first internet of things device.

In a first implementation, the second information may include location information of a first area in which the first internet of things device is located, for example, an identifier or coordinates of the first area. Therefore, the first core network element can select a terminal device at an appropriate location as the reader/writer based on the location information of the first area.

In a second implementation, the second information may include identification information of the terminal device. For example, the second information may be a subscription permanent identifier (subscription permanent identifier, SUPI), a subscription concealed identifier (subscription concealed identifier, SUCI), a public subscription identifier (generic public subscription identifier, GPSI), or a reader ID of the terminal device. Therefore, the first core network element may determine a terminal device requested by an application function network element, that is, may determine, based on the first information obtained in step S610, whether the terminal device has a capability of the reader/writer.

Optionally, in the second implementation, the second information may further include location information of a first area. Therefore, the first core network element may further determine whether coverage of the first capability of the terminal device in the second information overlaps the first area, and determine whether the terminal device can interact with the first internet of things device in the first area.

S630: The first core network element determines, based on the first information and the second information, the first terminal device in the terminal device having the first capability to perform the operation on the first internet of things device.

The first core network element may select, based on content of the first information and the second information, the appropriate terminal device (that is, the first terminal device) as the reader/writer to perform the operation on the first internet of things device.

In a first implementation, the first information includes location information of the terminal device having the first capability, and the second information includes location information of the first area. The first core network element may determine the first terminal device based on the location information of the terminal device having the first capability and the location information of the first area.

For example, the first core network element may select the terminal device located in the first area as the first terminal device. Alternatively, the first core network element may select one or more terminal devices closest to a center of the first area as the first terminal device. This is not particularly limited in this application.

For another example, the first core network element may determine a coverage area of the terminal device based on capability information of the terminal device. For example, the coverage area is an area with a center of the terminal device and a radius of a first threshold. The first threshold may be a coverage capability reported by the terminal device, or may be predefined by the network. This is not specifically limited in this application. The first core network element may select one or more first terminal devices based on the coverage area, so that a set of coverage areas of the one or more first terminal devices can cover the first area. In this way, reliable communication in the first area is implemented.

In a second implementation, the first information includes identification information of the terminal device having the first capability, and the second information includes identification information of a terminal device (represented by a terminal device #1 below). The first core network element may determine whether the terminal device #1 meets a first condition. If the terminal device #1 meets the first condition, the first core network element determines that the terminal device #1 is used as the first terminal device to obtain information about the first internet of things device in the first area. If the terminal device #1 does not meet the first condition, the first core network element determines that the terminal device #1 cannot be used as the first terminal device to obtain the information about the first internet of things device in the first area. The first condition is that the identification information of the first terminal device is included in the identification information of the terminal device having the first capability.

Optionally, the first condition further includes one or more of the following: a location of the terminal device #1 is in the first area, and the second information includes information about the first area in which the first internet of things device is located; coverage of the first capability of the terminal device #1 overlaps the first area, and the second information includes the information about the first area in which the first internet of things device is located; and the first information includes information about a service requester corresponding to the terminal device having the first capability, the second information includes information about a service requester corresponding to the terminal device #1, and the information about the service requester corresponding to the terminal device having the first capability includes the information about the service requester corresponding to the terminal device #1.

For example, after determining that the identification information of the terminal device #1 is included in the identification information of the terminal device having the first capability, the first core network element may further determine whether the terminal device #1 can interact with the first internet of things device. For example, if the terminal device #1 is located in the first area, the first core network element determines that the terminal device #1 can interact with the first internet of things device. Alternatively, even if the terminal device #1 is not in the first area, and the coverage area of the terminal device overlaps the first area, the first core network element may determine that the terminal device #1 can at least interact with the first internet of things device, and the first core network element may determine that the terminal device #1 is used as the first terminal device, that is, the terminal device #1 is used as the reader/writer to interact with the first internet of things device. Alternatively, the first core network element further checks whether the service requester corresponding to the terminal device #1 authorizes the terminal device #1 to perform the operation on the first internet of things device. In other words, the first information may include information about a service requester that is authorized to perform an operation on the internet of things device, the second information includes information about the service requester of the terminal device #1, and the first core network element may determine, through comparison, whether the terminal device #1 performs the operation on the first internet of things device.

It may be understood that the foregoing items in the first condition may be implemented separately or in combination. This is not particularly limited in this application.

In some implementations, if the terminal device #1 does not meet the first condition, the first core network element may return feedback information to the AF through the third core network element, where the feedback information may indicate that the terminal device #1 cannot obtain the information about the first internet of things device in the first area. Optionally, the feedback information further indicates a reason why the terminal device #1 cannot obtain the information about the first internet of things device in the first area, for example, the terminal device #1 does not have the first capability. For another example, the coverage area of the first capability of the terminal device #1 does not overlap the first area.

After the AF obtains the feedback information, the AF may re-provide the identification information of the terminal device, for example, information about a terminal device #2. The first core network element may repeat the determining procedure described above to determine the terminal device #2. Alternatively, after determining that the terminal device #1 does not meet the first condition, the first core network element may actively select a terminal device that can be used as the reader/writer. For example, the first core network element may determine the terminal device based on the location information of the terminal device having the first capability and the location information of the first area in the foregoing first implementation, and add identification information of the terminal device to the feedback information. Therefore, the AF determines whether to use the terminal device determined by the first core network element. Alternatively, the first core network element may indicate, without confirmation of the AF (that is, the feedback information may be used to notify the AF of the determined terminal device, or the first core network element does not send the feedback information), the determined terminal device to perform the operation on the first internet of things device. This is not particularly limited in this application.

It should be noted that the first core network element may obtain the location information of the terminal device #1 in a plurality of manners.

In a first possible implementation, the first core network element may obtain the location information of the terminal device #1 from the first information. In other words, the first information includes the location information of the terminal device #1 having the first capability.

In a second possible implementation, the first core network element may request to obtain the location information of the terminal device #1.

For example, the first core network element may obtain the location information of the terminal device #1 from the UDM. For example, the first core network element may obtain location request information from the UDM, so that the UDM may return the location information of the terminal device #1 to the first core network element, for example, location information preconfigured during subscription of the terminal device #1. For another example, the first core network element may send location request information to a location function network element (for example, an LMF), and the LMF performs positioning on the terminal device #1 to obtain the location information, and returns the location information to the first core network element. The location information may be a real-time location of the terminal device #1, user location information (user location information, ULI) of the terminal device #1, a restricted mobility area (restricted mobility area) of the terminal device #1, and/or a preconfigured location of the terminal device #1. This is not particularly limited in this application. The restricted mobility area indicates that the terminal device is considered as the reader/writer (having the first capability) only in the restricted mobility area. If the terminal device is located outside the restricted mobility area, the terminal device is considered as a common terminal device. The restricted mobility area may be represented by a cell (cell), a tracking area, or the like. This is not specifically limited in this application. The first core network element (or another core network element) may determine, based on the restricted mobility area and a location of the terminal device, whether the terminal device has the first capability.

It may be understood that the foregoing manner of obtaining the location information is merely an example for description, and the first core network element may alternatively obtain the location information in another manner. For example, the first core network element may determine, based on a requirement for the location information, a manner of obtaining the location information. For example, if the first core network element needs approximate location information, the first core network element may obtain a static location in a manner of obtaining preconfigured location information. On the contrary, if the first core network element needs accurate location information, the first core network element may obtain the location information by requesting the LMF to perform positioning. For another example, the first core network element may obtain the location information from the subscribed preconfiguration information by default. However, if the first core network element does not find the location information, the first core network element may perform positioning in another manner, for example, request the LMF to perform positioning. This is not particularly limited in this application.

After determining the first terminal device, the first core network element may request the first terminal device to perform the operation on the first internet of things device. In other words, the first core network element may further perform the following steps S640 to S670.

Optionally, S640: The first core network element sends request information #1 to a second core network element serving the first terminal device. Correspondingly, the second core network element receives the request information #1 from the first core network element.

The request information #1 is used to request the first terminal device to perform the operation on the first internet of things device. For example, the request information #1 includes identification information of the first terminal device, for example, an SUPI. The request information #1 may further include an internet of things management function container (TM container).

In some implementations, the first core network element may obtain, from the first information, information about the second core network element serving the first terminal device, for example, identification information of an AMF serving the first terminal device.

Optionally, S650: The second core network element serving the first terminal device sends request information #2 to the first terminal device. Correspondingly, the first terminal device receives the request information #2 from the second core network element.

The request information #2 is used to request the first terminal device to perform the operation on the first internet of things device. For example, the AMF may generate the request information #2 based on the request information #1. For example, the AMF may route the TM container in the request information #1 to the first terminal device through a NAS message.

Optionally, S660: The first terminal device performs the operation on the first internet of things device.

For example, in response to the request of the request information #2, the first terminal device may randomly access the internet of things device in the first area and read information about the internet of things device. For this step, refer to the foregoing function description of the reader/writer. Details are not described herein again.

Optionally, S670: The first terminal device sends information about the first internet of things device to the second core network element serving the first terminal device. Correspondingly, the second core network element receives the information about the first internet of things device from the first terminal device.

The first terminal device obtains the information about the first internet of things device, for example, identification information (for example, a device ID), and may return the information about the first internet of things device to the second core network element, for example, an AMF, through a NAS message.

Optionally, S680: The second core network element sends the information about the first internet of things device to the first core network element. Correspondingly, the first core network element may receive the information about the first internet of things device from the second core network element.

For example, the second core network element, for example, the AMF, may send the information about the first internet of things device obtained by the first terminal device to the first core network element.

Optionally, S690: The first core network element sends the information about the first internet of things device to the third core network element. Correspondingly, the third core network element may receive the information about the first internet of things device from the first core network element.

For example, the first core network element may send the information about the first internet of things device obtained by the first terminal device to the third core network element, for example, the NEF. Therefore, the third core network element may return the information about the first internet of things device to the operation request method (for example, the AF).

Based on this technical solution, the first core network element may obtain the first information indicating the terminal device having the first capability, and receive the second information used to request to perform an operation on a first internet of things device, so that the first terminal device that can perform the operation on the first internet of things device can be determined based on the first information and the second information, and the appropriate first terminal device is determined to perform the operation on the first internet of things device, so as to complete a request for performing the operation on the first internet of things device.

The foregoing describes the method for determining, by the first core network element, the first terminal device as the reader/writer. For ease of understanding embodiments of this application, the following describes, by using examples with reference to FIG. 7 and FIG. 8, two manners in which the first core network element obtains the first information.

For ease of description, in the following embodiments, an example in which the TMF is the first core network element is used for description.

FIG. 7 is a schematic flowchart of a method for obtaining first information according to an embodiment of this application.

S701: A terminal device sends capability information to an AMF. Correspondingly, the AMF receives the capability information from the terminal device.

The capability information indicates whether the terminal device has a first capability. For a description of the first capability, refer to the description of S610 in FIG. 6. Details are not described herein again.

In some implementations, the terminal device may send the capability information to the AMF through a RAN. The RAN may transparently transmit the capability information to the terminal device.

In some implementations, the terminal device may send a registration request message (registration request) to the AMF, where the registration request message carries the capability information.

In some implementations, the capability information may include one or more of the following: identification information of the terminal device, location information of the terminal device, information indicating coverage of the first capability of the terminal device, and information indicating a service request corresponding to the terminal device. For the foregoing information, refer to the description of S610 in FIG. 6. Details are not described herein again.

Optionally, S702: The terminal device, the RAN, and the AMF complete a registration procedure.

The AMF may complete a registration procedure of the terminal device based on the registration request message. For example, the AMF may perform authentication on the terminal device. For the registration procedure, refer to descriptions in a related conventional technology. For brevity, details are not described herein again.

S703: The AMF sends the capability information to a UDM.

For example, the AMF may send, to the UDM, a message carrying the capability information, for example, an Nudm_SDM_get message.

The AMF may learn, through the foregoing registration procedure, that the terminal device has the first capability, that is, the terminal device is the reader UE. For example, the AMF may learn, through the capability information in the registration request message, that the terminal device has the first capability. For another example, the AMF may learn, by querying subscription information of the terminal device, that the terminal device has the first capability. Therefore, after completing authentication on the terminal device, the AMF may notify the UDM of the capability information of the terminal device.

In some implementations, the AMF may further send, to the UDM, information indicating the AMF serving the terminal device. In other words, the AMF may notify the UDM that the AMF is a serving AMF (serving AMF) of the terminal device.

In some implementations, if the network replaces the AMF serving the terminal device, AMF redirection (relocation) occurs. In this case, the old AMF before the replacement or a new AMF after the replacement may notify the UDM of the updated AMF serving the terminal device. This is not particularly limited in this application.

Optionally, S704: The UDM sends response information to the AMF.

The UDM may generate the first information based on the information provided by the AMF, and actively send the first information to the TMF. Alternatively, the UDM may request the first information from the UDM. In this case, the TMF may perform the following step S704.

Optionally, S705: The TMF sends subscription request information to the UDM.

The subscription request information is used to request information about the terminal device having the first capability. In other words, the subscription request information may request the UDM to return the first information. For detailed descriptions of the first information, refer to the descriptions of S610 in FIG. 6. Details are not described herein again.

In some implementations, the TMF may further determine the UDM. For example, the TMF requests information about the UDM from an NRF based on a location area served by the TMF. For another example, the TMF sends the subscription request information to all UDMs in a PLMN. This is not particularly limited in this application.

A message type of the subscription request information is not specifically limited in this application.

In a first possible implementation, the subscription request information may be a new message type, for example, Nudm_AIoTReader_Subscription. The TMF may access information about all UEs having a reader capability in the UDM.

In a second possible implementation, the subscription message may be an existing message type. The TMF may reuse an existing message type and add a new information element to indicate that information about the reader UE needs to be obtained. For example, the information element may include one or more of the following: an information element #1 (for example, AIoT UE reader information get), used to request to obtain information about the AIoT reader UE; and an information element #2 (for example, a TMF ID), indicating an identifier of the TFM that sends the request.

Optionally, S706: The UDM determines whether to position the terminal device.

For example, the UDM may determine, based on a subscription requirement expressed by the subscription request information, whether the terminal device needs to be positioned. For example, if the information about the terminal device that is subscribed to through the subscription request information includes the location information of the terminal device (or information whose condition is the location information), the UDM may determine to position the terminal device. On the contrary, if the information about the terminal device that is subscribed to does not include the location information, the UDM may determine not to position the terminal device. This is not particularly limited in this application.

A method for positioning the terminal device is not particularly limited in this application.

For example, the UDM may query the location information preconfigured in the terminal device in the subscription, or location information preconfigured in another network element. Therefore, the UDM may obtain a static location of the first terminal. For another example, the UDM may request an LMF to position the terminal device. The following uses an example in which the UDM requests the LMF to position the terminal device for description. In other words, the UDM may perform the following steps S707 to S709.

Optionally, S707: The UDM sends location request information to the LMF.

The location request information is used to request the location information of the terminal device having the first capability. For example, the location request information may include the identification information of the terminal device, for example, an SUPI. Therefore, the LMF may position the terminal device based on the identification information.

In some implementations, the UDM may send a message carrying the location request information, for example, Nlmf_location_subcription.

Optionally, S708: The LMF obtains the location information of the terminal device.

The LMF may position the terminal device based on the location request information. For a manner in which the LMF obtains the location information of the terminal device, refer to an existing positioning manner. Details are not described herein.

Optionally, S709: The LMF sends the location information of the terminal device having the first capability to the UDM.

For example, the LMF sends, to the UDM, a message that carries the location information of the terminal device having the first capability, for example, an Nlmf_location_event notify message. In some implementations, the message may further the carry identification information of the terminal device, for example, an SUPI. Therefore, the UDM may obtain accurate location information of the terminal device from the LMF.

It may be understood that the foregoing positioning manner is merely an example for description, and it is not excluded that the UDM may further use another manner to obtain the location information. The UDM may determine a manner of obtaining the location information based on a requirement for the location information. For example, if the UDM needs approximate location information, the UDM may obtain the static location in a manner of obtaining preconfigured location information. On the contrary, if the UDM needs accurate location information, the UDM may obtain the location information by requesting the LMF to perform positioning. For another example, the UDM may obtain the location information from the subscribed preconfiguration information by default. However, if the UDM does not find the location information, the UDM may perform positioning in another manner, for example, request the LMF to perform positioning. This is not particularly limited in this application.

S710: The UDM sends the first information to the TMF.

The first information indicates the terminal device having the first capability. For a description of the first information, refer to the description of S610 in FIG. 6. Details are not described herein again. In some implementations, the UDM may send a message carrying the first information, for example, Nudm_AloTReader_Notify, to the TMF.

If the TMF requests the location information, when the UDM finds that the location changes (for example, the LMF reports new location information, or the configured location information changes), the UDM also updates latest information of the terminal device (the reader UE) having the first capability to the TMF.

When the UDM feeds back the subscribed information about the reader UE to the TMF, a new message type may be used, or an existing message type may be reused. However, a new information element indicates, for example, a parameter for initiating subscription by the TMF to the UDM, and indicates that this information is used to feed back the information about the reader UE.

The information about the reader UE that is stored in the TMF may have a plurality of data storage formats. For example, a UE ID like the SUPI may be used as a storage index (key); or a geographical location of the UE may be used as a storage index; or a serving AMF corresponding to the UE may be used as a storage index. This is not particularly limited in this application.

Based on the foregoing technical solution, FIG. 7 describes a method for obtaining first information from the UDM. With reference to FIG. 8, the following describes a method for obtaining the first information from an AMF.

FIG. 8 is a schematic flowchart of another method for obtaining first information according to an embodiment of this application.

S801: A terminal device sends capability information to an AMF.

For this step, refer to the description of step S701 in FIG. 7. Details are not described herein again.

Optionally, S802: The terminal device, the RAN, and the AMF complete a registration procedure.

For this step, refer to the description of step S702 in FIG. 7. Details are not described herein again.

The AMF may generate the first information based on the information provided by the terminal device, and actively send the first information to the AMF. Alternatively, the TMF may request the first information from the AMF. In this case, the TMF may perform the following step S803.

Optionally, S803: The TMF sends subscription request information to the AMF.

The subscription request information is used to request information about the terminal device having the first capability. In other words, the subscription request information may request the AMF to return the first information. For detailed descriptions of the first information, refer to the descriptions of S610 in FIG. 6. Details are not described herein again.

In some implementations, the TMF may further determine the AMF. For example, the TMF requests information about the AMF from an NRF based on a location area served by the TMF. For another example, the TMF sends the subscription request information to all AMFs in a PLMN. This is not particularly limited in this application.

A message type of the subscription request information is not specifically limited in this application.

In a first possible implementation, the subscription request information may be a new message type, for example, Namf_AIoTReader_Subscription. The TMF may access information about all UEs having the first capability in the AMF.

In a second possible implementation, the subscription message may be an existing message type. The TMF may reuse an existing message type and add a new information element to indicate that information about the reader UE needs to be obtained. For example, the information element may include one or more of the following: an information element #1 (for example, AIoT UE reader information get), used to request to obtain information about the AIoT reader UE; and an information element #2 (for example, a TMF ID), indicating an identifier of the TFM that sends the request.

Optionally, S804: The AMF determines to position the terminal device.

For a manner in which the AMF determines whether to position the terminal device, refer to the description of determining, by the UDM, whether to position the terminal device in step S706 in FIG. 7. For brevity, details are not described herein again. The following uses an example in which the AMF requests the LMF to position the terminal device for description. In other words, the AMF may perform the following steps S707 to S709.

Optionally, S805: The AMF sends location request information to the LMF.

The location request information is used to request the location information of the terminal device having the first capability. For example, the location request information may include the identification information of the terminal device, for example, an SUPI. Therefore, the LMF may position the terminal device based on the identification information.

In some implementations, the UDM may send a message carrying the location request information, for example, Nlmf_location_subcription.

Optionally, S806: The LMF obtains the location information of the terminal device.

The LMF may position the terminal device based on the location request information. For a manner in which the LMF obtains the location information of the terminal device, refer to an existing positioning manner. Details are not described herein.

Optionally, S807: the LMF sends the location information of the terminal device to the AMF.

For example, the LMF sends, to the AMF, a message that carries the location information of the terminal device having the first capability, for example, an Nlmf_location_event notify message. In some implementations, the message may further the carry identification information of the terminal device, for example, an SUPI. Therefore, the UDM may obtain accurate location information of the terminal device from the LMF.

S808: The AMF sends the first information to the LMF.

The first information indicates the terminal device having the first capability. For a description of the first information, refer to the description of S610 in FIG. 6. Details are not described herein again. In some implementations, the AMF may send, to the TMF, a message carrying the first information, for example, an Namf_AloTReader_Notify message.

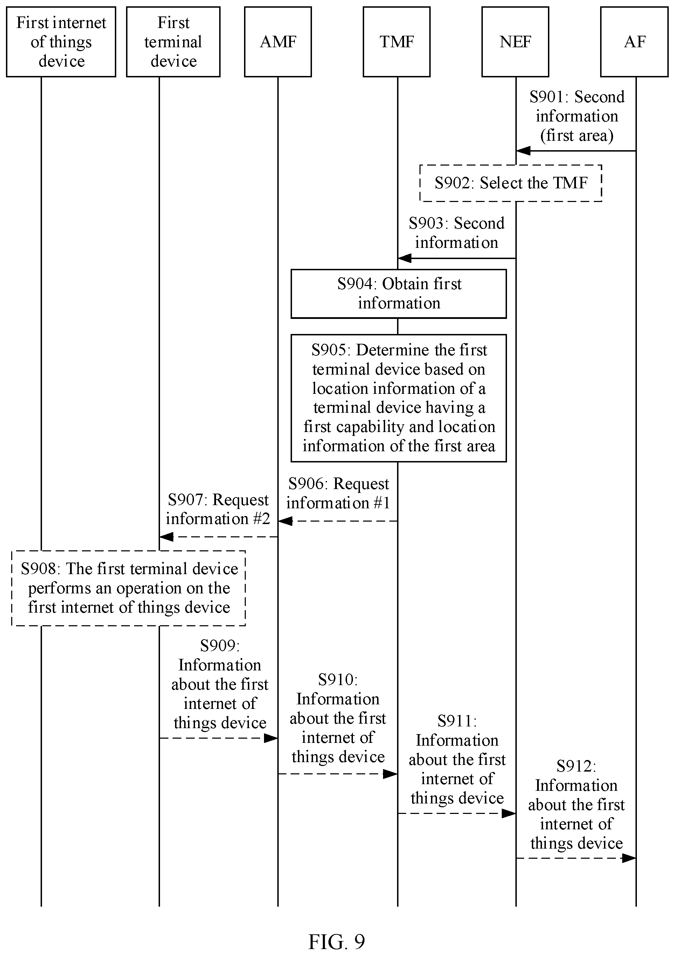

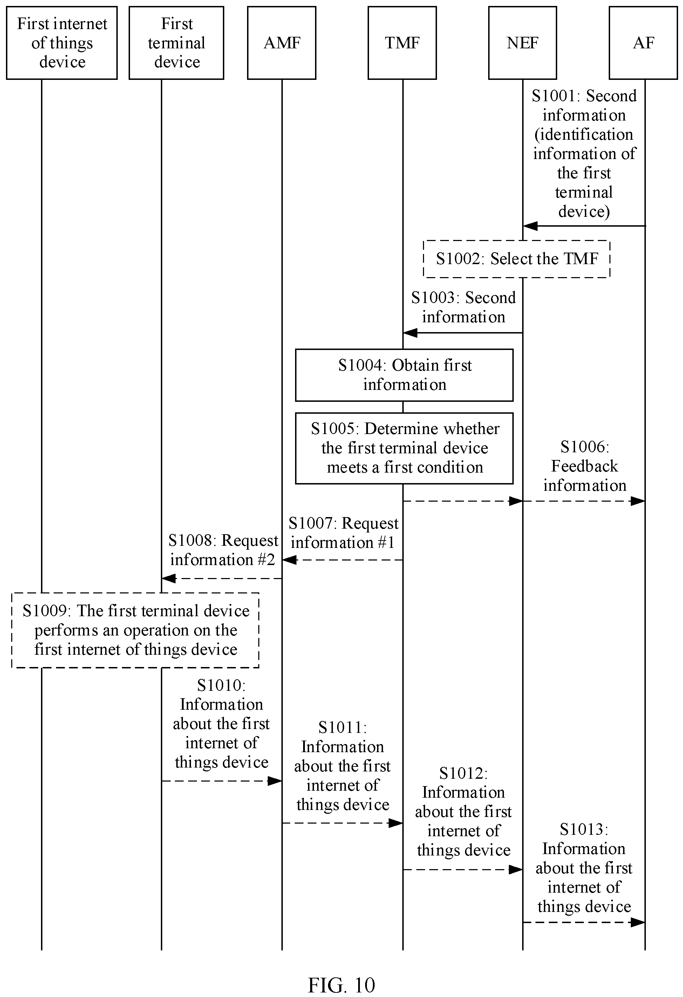

Based on the foregoing technical solution, the TMF may obtain the first information from the UDM or the AMF, so that the first terminal device can subsequently be selected based on the first information to obtain the information about the internet of things device in the first area. To facilitate understanding of the embodiments of this application, the following describes, with reference to FIG. 9 and FIG. 10, two possible manners of selecting the first terminal device. In the following example, for ease of description, an example in which the TMF is the first core network element, the AMF is the second core network element, and the NEF is the third core network element is used for description. It may be understood that these network elements may be replaced with other network elements based on the description in FIG. 3.

FIG. 9 is a schematic flowchart of a method for determining a first terminal device according to an embodiment of this application.

S901: An AF sends second information to an NEF.

The second information is used to request to perform an operation on a first internet of things device. The second information includes location information of a first area in which the first internet of things device is located, for example, location information of the first area in which the first internet of things device is located. For detailed descriptions of the second information, refer to the descriptions of step S620 in FIG. 6. Details are not described herein again.

In some implementations, the AF may send a message carrying second information, for example, Nnef_AloT_Inventory, to the NEF. Optionally, the message may further carry identification information of the AF, for example, an AF ID, so that a core network element (for example, the NEF or a TMF) may subsequently perform subscription verification on the AF based on the identification information of the AF, to determine whether the AF has permission to request to perform the operation on the internet of things device. If the AF has the permission, subsequent operations continue. If the AF does not have the permission, the core network element that verifies whether the AF has the permission may return, to the AF, information indicating that the AF does not have the permission to perform the operation.

Optionally, S902: The NEF selects a TMF.

For example, the NEF may select the appropriate TMF based on the location information of the first area.

S903: An NEF sends second information to an TMF.

For example, the NEF may send the second information provided by the AF to the TMF. For example, the NEF may send a message carrying the second information, for example, Ntmf_AloT_Inventory, to the TMF. Optionally, the message may further carry identification information of the AF, for example, an AF ID.

S904: The TMF obtains the first information.

The TMF may obtain the first information by using the method shown in FIG. 7, or may obtain the first information by using the method shown in FIG. 8. Details are not described herein again.

S905: The TMF determines the first terminal device based on location information of a terminal device having a first capability and the location information of the first area.

For example, the TMF may select a terminal device located in the first area as the first terminal device, or select a terminal device whose coverage area overlaps the first area as the first terminal device. For more detailed descriptions of this step, refer to the description of the first implementation in step S630 in FIG. 6. Details are not described herein again.

Optionally, S906: The TMF sends request information #1 to the AMF.

The request information #1 is used to request the first terminal device to perform the operation on the first internet of things device. For detailed descriptions of this step, refer to the descriptions of step S640 in FIG. 6. Details are not described herein again.

Optionally, S907: The AMF sends request information #2 to the first terminal device.

The request information #2 is used to request the first terminal device to perform the operation on the first internet of things device. For detailed descriptions of this step, refer to the descriptions of step S650 in FIG. 6. Details are not described herein again.

Optionally, S908: The first terminal device performs the operation on the first internet of things device.

For detailed descriptions of this step, refer to the descriptions of step S660 in FIG. 6. Details are not described herein again.

Optionally, S909: The first terminal device sends information about the first internet of things device to the AMF.

For detailed descriptions of this step, refer to the descriptions of step S670 in FIG. 6. Details are not described herein again.

Optionally, S910: The AMF sends the information about the first internet of things device to the TMF.

For detailed descriptions of this step, refer to the descriptions of step S680 in FIG. 6. Details are not described herein again.

Optionally, S911: The TMF sends the information about the first internet of things device to the NEF.

For example, the TMF may send, to the NEF, a message that carries the information about the first internet of things device, for example, Ntmf_AloT_Inventory_Notify.

Optionally, S912: The NEF sends the information about the first internet of things device to the AF.

For example, the NEF may send, to the AF, a message that carries the information about the first internet of things device, for example, Nnef_AloT_Inventory_Notify.

Based on this technical solution, the first core network element may further determine a capability of the first terminal device, for example, whether the first terminal device is in the first area in which the first terminal device can perform the operation on the first internet of things device, and whether the service requester corresponding to the first terminal device is the service requester corresponding to the terminal device having the first capability; and further determine whether the first terminal device can perform the operation on the first internet of things device, thereby improving reliability of performing the operation on the internet of things device.

FIG. 10 is a schematic flowchart of another method for determining a first terminal device according to an embodiment of this application.

S1001: An AF sends second information to an NEF.

The second information may include identification information of the first terminal device. For detailed descriptions of this step, refer to the descriptions of step S901 in FIG. 9. Details are not described herein again.

S1002: The NEF selects a TMF.

For detailed descriptions of this step, refer to the descriptions of step S902 in FIG. 9. Details are not described herein again.

S1003: An NEF sends second information to an TMF.

The AF provides the identification information of the first terminal device to the NEF. A form of the identification information of the first terminal device may be an SUPI, an SUCI, a GPSI, or a special external reader/writer identifier. In some implementations, if the AF does not provide the SUPI, the NEF may convert the identifier provided by the AF into the SUPI (or a special internal reader/writer identifier).

For detailed descriptions of this step, refer to the descriptions of step S903 in FIG. 9. Details are not described herein again.

S1004: The TMF obtains the first information.

The TMF may obtain the first information by using the method shown in FIG. 7, or may obtain the first information by using the method shown in FIG. 8. Details are not described herein again.

S1005: The TMF determines whether the first terminal device meets a first condition.

The first condition includes that the identification information of the first terminal device is included in identification information of a terminal device having a first capability. Optionally, the first condition further includes one or more of the following: a location of the first terminal device is in a first area, coverage of the first capability of the first terminal device overlaps the first area, and information about a service requester corresponding to the terminal device having the first capability includes information about a service requester corresponding to the first terminal device. For detailed descriptions of this step, refer to the description of the second implementation in step S630 in FIG. 6. Details are not described herein again.

Optionally, S1006: The TMF sends feedback information to the AF.

The feedback information may indicate whether the first terminal device meets the first condition. If the first condition is not met, a reason why the first condition is not met may be further indicated. The TMF stores a capability and identifier of the terminal device having the first capability, and serving AMF information. After receiving the SUPI of the first terminal device that is provided by the AF, the TMF determines whether the first terminal device is the UE having the first capability. If the first terminal device is the UE having the first capability, subsequent AF subscription check is performed. If the first terminal device is not the UE having the first capability, an optional cause value may be fed back to the AF, to notify the AF that the operation fails, and the cause is that the first terminal device fails to be authorized.

For detailed descriptions of this step, refer to the description of the second implementation in step S630 in FIG. 6. Details are not described herein again.

Optionally, S1007: The TMF sends request information #1 to the AMF.

The request information #1 is used to request the first terminal device to perform the operation on the first internet of things device. For detailed descriptions of this step, refer to the descriptions of step S640 in FIG. 6. Details are not described herein again.

Optionally, S1008: The AMF sends request information #2 to the first terminal device.

The request information #2 is used to request the first terminal device to perform the operation on the first internet of things device. For detailed descriptions of this step, refer to the descriptions of step S650 in FIG. 6. Details are not described herein again.

Optionally, S1009: The first terminal device obtains information about the first internet of things device.

For detailed descriptions of this step, refer to the descriptions of step S660 in FIG. 6. Details are not described herein again.

Optionally, S1010: The first terminal device sends information about the first internet of things device to the AMF.

For detailed descriptions of this step, refer to the descriptions of step S670 in FIG. 6. Details are not described herein again.

Optionally, S1011: The AMF sends the information about the first internet of things device to the TMF.

For detailed descriptions of this step, refer to the descriptions of step S680 in FIG. 6. Details are not described herein again.

Optionally, S1012: The TMF sends the information about the first internet of things device to the NEF.

For example, the TMF may send, to the NEF, a message that carries the information about the first internet of things device, for example, Ntmf_AloT_Inventory_Notify.

Optionally, S1013: The NEF sends the information about the first internet of things device to the AF.

For example, the NEF may send, to the AF, a message that carries the information about the first internet of things device, for example, Nnef_AloT_Inventory_Notify.

Based on this technical solution, the first core network element may further determine a capability of the first terminal device, for example, whether the first terminal device is in the first area in which the first terminal device can perform the operation on the first internet of things device, and whether the service requester corresponding to the first terminal device is the service requester corresponding to the terminal device having the first capability; and further determine whether the first terminal device can perform the operation on the first internet of things device, thereby improving reliability of performing the operation on the internet of things device.

It should be understood that, in embodiments of this application, unless otherwise stated or there is a logical conflict, terms and/or descriptions in different embodiments are consistent and may be mutually referenced, and technical features in different embodiments may be combined based on an internal logical relationship thereof, to form a new embodiment.

It should be further understood that, in some of the foregoing embodiments, a device in an existing network architecture is mainly used as an example for description. It should be understood that, a specific form of the device is not limited in embodiments of this application. For example, all devices that can implement a same function in the future are applicable to embodiments of this application.

It may be understood that, in the foregoing method embodiments, the methods and operations implemented by the device (for example, the first core network element, the second core network element, the third core network element, the first terminal device, or the internet of things device) may alternatively be implemented by a component (for example, a chip or a circuit) that may be used in the device.

It may be further understood that, in embodiments of this application, a sequence of steps may be determined based on internal logic of the steps, and step numbers do not limit the sequence of the steps. For example, the first core network element may first perform S610 and then perform S620, or may first perform S620 and then perform S610.

It may be further understood that some optional features in embodiments of this application may be independent of other features in some scenarios, or may be combined with other features in some scenarios. This is not limited.

The foregoing describes, in detail with reference to FIG. 6 to FIG. 10, the communication methods provided in embodiments of this application. The foregoing communication method is mainly described from a perspective of the first core network element, the second core network element, the third core network element, the first terminal device, or the internet of things device. It may be understood that, to implement the foregoing functions, the first core network element, the second core network element, the third core network element, the first terminal device, or the internet of things device includes corresponding hardware structures and/or software modules for performing the functions.

A person skilled in the art should be aware that units and algorithm steps in the examples described with reference to embodiments disclosed in this specification can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

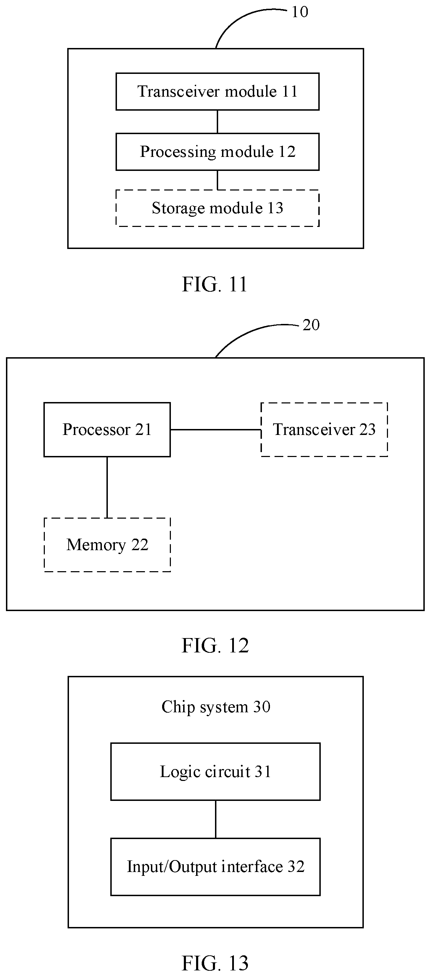

The following describes in detail communication apparatuses provided in embodiments of this application with reference to FIG. 11 to FIG. 13. It should be understood that descriptions of apparatus embodiments correspond to the descriptions of the method embodiments. Therefore, for content that is not described in detail, refer to the foregoing method embodiments. For brevity, some content is not described again.

In embodiments of this application, functional modules of a transmitting device or a receiving device may be divided based on the foregoing method examples. For example, functional modules may be divided based on functions, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

FIG. 11 is a block diagram of a communication apparatus 10 according to an embodiment of this application. The apparatus 10 includes a transceiver module 11 and a processing module 12. The transceiver module 11 may implement a corresponding communication function, and the processing module 12 is configured to perform data processing. In other words, the transceiver module 11 is configured to perform receiving and sending-related operations, and the processing module 12 is configured to perform operations other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, to enable the apparatus to implement actions of a device in the foregoing method embodiments.

In a first design, the apparatus 10 may correspond to the first core network element in the foregoing method embodiments, or may be a component (for example, a chip) of the first core network element.

The apparatus 10 may implement the corresponding steps or procedures performed by the first core network element in the foregoing method embodiments. The transceiver module 11 may be configured to perform receiving and sending-related operations of the first core network element in the foregoing method embodiments, and the processing module 12 may be configured to perform processing-related operations of the first core network element in the foregoing method embodiments.

It should be understood that a specific process in which the units perform the foregoing corresponding steps is described in detail in the foregoing method embodiments. For brevity, details are not described herein.

In a second design, the apparatus 10 may correspond to the second core network element in the foregoing method embodiment, or may be a component (for example, a chip) of the second core network element.

The apparatus 10 may implement corresponding steps or procedures performed by the second core network element in the foregoing method embodiment. The transceiver module 11 may be configured to perform receiving and sending-related operations of the second core network element in the foregoing method embodiment, and the processing module 12 may be configured to perform processing-related operations of the second core network element in the foregoing method embodiment.

It should be understood that a specific process in which the units perform the foregoing corresponding steps is described in detail in the foregoing method embodiments. For brevity, details are not described herein.

In a third design, the apparatus 10 may correspond to the third core network element in the foregoing method embodiments, or may be a component (for example, a chip) of the third core network element.

The apparatus 10 may implement corresponding steps or procedures performed by the third core network element in the foregoing method embodiments. The transceiver module 11 may be configured to perform receiving and sending-related operations of the third core network element in the foregoing method embodiments, and the processing module 12 may be configured to perform processing-related operations of the third core network element in the foregoing method embodiments.

It should be understood that a specific process in which the units perform the foregoing corresponding steps is described in detail in the foregoing method embodiments. For brevity, details are not described herein.

In a fourth design, the apparatus 10 may correspond to the first terminal device in the foregoing method embodiments, or may be a component (for example, a chip) of the first terminal device.

The apparatus 10 may implement steps or procedures performed by the first terminal device in the foregoing method embodiments. The transceiver module 11 may be configured to perform receiving and sending-related operations of the first terminal device in the foregoing method embodiments, and the processing module 12 may be configured to perform processing-related operations of the first terminal device in the foregoing method embodiments.

It should be understood that a specific process in which the units perform the foregoing corresponding steps is described in detail in the foregoing method embodiments. For brevity, details are not described herein.

It should be further understood that the apparatus 10 herein is presented in a form of a functional module. The term "module" herein may be an application-specific integrated circuit (application specific-integrated circuit, ASIC), an electronic circuit, a processor (for example, a shared processor, a dedicated processor, or a group processor) configured to execute one or more software or firmware programs, a memory, a combined logic circuit, and/or another appropriate component that supports the described function. In an optional example, a person skilled in the art may understand that the apparatus 10 may be specifically the mobility management network element in the foregoing embodiments, and may be configured to perform the procedures and/or steps corresponding to the mobility management network element in the foregoing method embodiments. Alternatively, the apparatus 10 may be specifically the terminal device in the foregoing embodiments, and may be configured to perform the procedures and/or steps corresponding to the terminal device in the foregoing method embodiments. To avoid repetition, details are not described herein again.

The apparatus 10 in the foregoing solutions has a function of implementing corresponding steps performed by the device (for example, the first core network element, the second core network element, the third core network element, the first terminal device, or the internet of things device) in the foregoing methods. The function may be implemented by hardware, or may be implemented by hardware executing corresponding software. The hardware or software includes one or more modules corresponding to the foregoing functions. For example, the transceiver module may be replaced with a transceiver (for example, a sending unit in the transceiver module may be replaced with a transmitter, and a receiving unit in the transceiver module may be replaced with a receiver), and another unit such as a processing module may be replaced with a processor, to separately perform a receiving and sending operation and a related processing operation in each method embodiment.

In addition, the transceiver module 11 may be a transceiver circuit (for example, may include a receiver circuit and a transmitter circuit), and the processing module may be a processing circuit.

FIG. 12 is a diagram of another communication apparatus 20 according to an embodiment of this application. The apparatus 20 includes a processor 21. The processor 21 is configured to: execute a computer program or instructions stored in a memory 22, or read data/signaling stored in the memory 22, to perform the method in the foregoing method embodiments. Optionally, there are one or more processors 21.

Optionally, as shown in FIG. 12, the apparatus 20 further includes the memory 22, and the memory 22 is configured to store the computer program or instructions and/or data. The memory 22 and the processor 21 may be integrated together, or may be disposed separately. Optionally, there are one or more memories 22.

Optionally, as shown in FIG. 12, the apparatus 20 further includes a transceiver 23. The transceiver 23 is configured to: receive and/or send a signal. For example, the processor 21 is configured to control the transceiver 23 to receive and/or send a signal.

In a solution, the apparatus 20 is configured to implement operations performed by the first core network element, the second core network element, the third core network element, the first terminal device, or the internet of things device in the foregoing method embodiments.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logical device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or a transistor logical device, or a discrete hardware component, the memory (a storage module) may be integrated into the processor.

It should further be noted that the memory described in this specification is intended to include, but is not limited to, these and any other appropriate type of memory.

FIG. 13 is a diagram of a chip system 30 according to an embodiment of this application. The chip system 30 (or may be referred to as a processing system) includes a logic circuit 31 and an input/output interface (input/output interface) 32.

The logic circuit 31 may be a processing circuit in the chip system 30. The logic circuit 31 may be coupled to a storage unit, and invoke instructions in the storage unit, so that the chip system 30 can implement the methods and functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement operations performed by the first core network element, the second core network element, the third core network element, the first terminal device, or the internet of things device in the foregoing method embodiments.

For example, the logic circuit 31 is configured to implement processing-related operations performed by the first core network element, the second core network element, the third core network element, the first terminal device, or the internet of things device in the foregoing method embodiments. The input/output interface 32 is configured to implement sending-related and/or receiving-related operations performed by the terminal device in the foregoing method embodiments.

An embodiment of this application further provides a computer-readable storage medium. The computer-readable storage medium stores computer instructions for implementing the method performed by the device in the foregoing method embodiments.

For example, when a computer program is executed by a computer, the computer is enabled to implement the methods performed by the first core network element, the second core network element, the third core network element, the first terminal device, or the internet of things device in the foregoing method embodiments.

An embodiment of this application further provides a computer program product, including instructions. When the instructions are executed by a computer, the methods performed by the first core network element, the second core network element, the third core network element, the first terminal device, or the internet of things device in the foregoing method embodiments are implemented.

An embodiment of this application further provides a communication system, including the first core network element, the second core network element, the third core network element, the first terminal device, or the internet of things device.

For explanations and beneficial effect of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for determining a terminal device, wherein the method comprises:
obtaining first information, wherein the first information indicates a terminal device having a first capability, and the first capability comprises a capability of performing an operation on an internet of things device;
receiving second information, wherein the second information is used to request to perform an operation on a first internet of things device; and
determining, based on the first information and the second information, a first terminal device in the terminal device having the first capability to perform an operation on the first internet of things device.

2. The method according to claim 1, wherein the first information comprises one or more of the following: identification information of the terminal device having the first capability, location information of the terminal device having the first capability, information about a core network element serving the terminal device having the first capability, information indicating coverage of the first capability of the terminal device having the first capability, and information indicating a service requester corresponding to the terminal device having the first capability.

3. The method according to claim 1 or 2, wherein the determining, based on the first information and the second information, the first terminal device in the terminal device having the first capability to perform the operation on the first internet of things device comprises:
determining, based on the location information of the terminal device having the first capability and location information of a first area in which the first internet of things device is located, the first terminal device in the terminal device having the first capability to perform the operation on the first internet of things device, wherein the second information comprises the location information of the first area.

4. The method according to claim 3, wherein
the first information comprises the location information of the terminal device having the first capability; or
the method further comprises:
sending location request information, wherein the location request information is used to request the location information of the terminal device having the first capability; and
receiving the location information of the terminal device having the first capability.

5. The method according to claim 1 or 2, wherein the second information is used to request the first terminal device to perform the operation on the first internet of things device, and the second information comprises identification information of the first terminal device; and
the determining, based on the first information and the second information, the first terminal device in the terminal device having the first capability to perform the operation on the first internet of things device comprises:
determining that the first terminal device meets a first condition, to determine the first terminal device to perform the operation on the first internet of things device, wherein
the first condition comprises: the identification information of the first terminal device is comprised in the identification information of the terminal device having the first capability, and the first information comprises the identification information of the terminal device having the first capability.

6. The method according to claim 5, wherein the first condition further comprises one or more of the following:
a location of the first terminal device is in a first area, and the second information comprises information about the first area in which the first internet of things device is located;
coverage of the first capability of the first terminal device overlaps the first area, and the second information comprises the information about the first area in which the first internet of things device is located; and
the first information comprises the information about the service requester corresponding to the terminal device having the first capability, the second information comprises information about a service requester corresponding to the first terminal device, and the information about the service requester corresponding to the terminal device having the first capability comprises the information about the service requester corresponding to the first terminal device.

7. The method according to any one of claims 1 to 6, wherein the obtaining the first information comprises:
sending a subscription request message, wherein the subscription request message is used to request information about the terminal device having the first capability; and
receiving a notification message in response to the subscription request message, wherein the notification message comprises the first information.

8. The method according to any one of claims 1 to 7, wherein the method further comprises:
sending request information to a core network element serving the first terminal device, wherein the request information is used to request the first terminal device to perform the operation on the first internet of things device;
receiving information about the first internet of things device from the first terminal device; and
sending the information about the first internet of things device in response to the second information.

9. A method for determining a terminal device, wherein the method comprises:
sending first information, wherein the first information indicates a terminal device having a first capability, the first capability comprises a capability of performing an operation on an internet of things device, and the first information is used to determine, from the terminal device having the first capability, a first terminal device that is to perform an operation on a first internet of things device.

10. The method according to claim 9, wherein the first information comprises one or more of the following: identification information of the terminal device having the first capability, location information of the terminal device having the first capability, capability information of the terminal device having the first capability, information about a core network element serving the terminal device having the first capability, information indicating coverage of the first capability of the terminal device having the first capability, and information indicating a service requester corresponding to the terminal device having the first capability.

11. The method according to claim 9 or 10, wherein the method further comprises:
receiving subscription request information, wherein the subscription request information is used to request the first information.

12. The method according to any one of claims 9 to 11, wherein the method further comprises:
sending location request information, wherein the location request information is used to request the location information of the terminal device having the first capability; and
receiving the location information of the terminal device having the first capability, wherein the first information comprises the location information of the terminal device having the first capability.

13. The method according to any one of claims 9 to 12, wherein the method further comprises:
receiving capability information from the terminal device, wherein the first information is generated based on the capability information, and the capability information indicates one or more of the following: whether the terminal device has the first capability, the coverage of the first capability, and the service requester corresponding to the terminal device.

14. The method according to any one of claims 9 to 13, wherein the method further comprises:
receiving request information, wherein the request information is used to request the first terminal device to perform the operation on the first internet of things device;
sending, to the first terminal device, information used to request to perform the operation on the first internet of things device;
receiving information about the first internet of things device from the first terminal device; and
sending the information about the first internet of things device in response to the request information.

15. A communication system, comprising at least one of the following devices:
a communication apparatus configured to perform the method according to any one of claim 1 or 8; or
a communication apparatus configured to perform the method according to any one of claims 9 to 14.

16. A communication apparatus, comprising a module or a unit configured to perform the method according to any one of claims 1 to 8, or comprising a module or a unit configured to perform the method according to any one of claims 9 to 14.

17. A communication apparatus, comprising:
a processing circuit and a memory, wherein the memory is configured to store a computer program or instructions, and the processing circuit is configured to execute the computer program or the instructions stored in the memory, to enable the apparatus to perform the method according to any one of claims 1 to 8, or to enable the apparatus to perform the method according to any one of claims 9 to 14.

18. The apparatus according to claim 17, wherein the apparatus is a chip.

19. A computer-readable storage medium, wherein the computer-readable storage medium stores a computer program or instructions, and when the computer program or the instructions are run on a computer, the computer is enabled to perform the method according to any one of claims 1 to 8, or the computer is enabled to perform the method according to any one of claims 9 to 14.

20. A computer program product, wherein the computer program product comprises instructions used to perform the method according to any one of claims 1 to 8, or instructions used to perform the method according to any one of claims 9 to 14.
